# EUROPEAN PATENT SPECIFICATION

(11) **EP 3 777 219 B1**
(45) Date of publication and mention of the grant of the patent: **01.05.2024**
(21) Application number: 19782008.7
(22) Date of filing: 25.03.2019
(51) Int. Cl.: H04N 21/6587, H04N 21/4728, H04N 21/472, H04N 13/161, H04N 13/279, G06T 15/00, H04N 19/70

(54) **METHOD AND APPARATUS FOR SIGNALING AND STORAGE OF MULTIPLE VIEWPOINTS FOR OMNIDIRECTIONAL AUDIOVISUAL CONTENT**
VERFAHREN UND VORRICHTUNG ZUR SIGNALISIERUNG UND SPEICHERUNG VON MEHREREN ANSICHTSPUNKTEN FÜR OMNIDIREKTIONALEN AUDIOVISUELLEN INHALT
PROCÉDÉ ET APPAREIL DE SIGNALISATION ET DE STOCKAGE DE POINTS DE VUE MULTIPLES POUR UN CONTENU AUDIOVISUEL OMNIDIRECTIONNEL

(30) Priority: 06.04.2018 US 201862654039 P
(43) Date of publication of application: 17.02.2021
(73) Proprietor: Nokia Technologies Oy, 02610 Espoo (FI)
(72) Inventor: MATE, Sujeet, 33720 Tampere (FI); CURCIO, Igor, 33100 Tampere (FI); HANNUKSELA, Miska, 33610 Tampere (FI); AKSU, Emre, 33800 Tampere (FI); KAMMACHI SREEDHAR, Kashyap, 33720 Tampere (FI)
(74) Representative: Berggren Oy
(86) International application number: PCT/FI2019/050244
(87) International publication number: WO 2019/193245

(56) References cited:
- WO-A1-2018/046797
- WO-A1-2018/046797
- PEIYUN DI ET AL: "ROI Stream for OMAF", 116. MPEG MEETING; 20161014 - 20161021; CHENGDU; (MOTION PICTURE EXPERT GROUP OR ISO/IEC JTC1/SC29/WG11), , no. m39209 18 October 2016 (2016-10-18), XP030067555, Retrieved from the Internet: URL:http://phenix.int-evry.fr/mpeg/doc_end _user/documents/116_Chengdu/wg11/m39209-v2 -m39209.zip m39209.docx [retrieved on 2016-10-18]
- MADHUKAR BUDAGAVI (SAMSUNG): "OMAF: Metadata for supporting Hotspots in omnidirectional video", 119. MPEG MEETING; 20170717 - 20170721; TORINO; (MOTION PICTURE EXPERT GROUP OR ISO/IEC JTC1/SC29/WG11), , no. m41182 10 July 2017 (2017-07-10), XP030069525, Retrieved from the Internet: URL:http://phenix.int-evry.fr/mpeg/doc_end _user/documents/119_Torino/wg11/m41182-v1- m41182-Hotspots.zip m41182-Hotspots.docx [retrieved on 2017-07-10]
- DI, P. et al.: "ROI Stream for OMAF", 116. MPEG meeting; 17-10-2016 - 21-10-2016; Chengdu; (Motion Picture Expert Group or ISO/IEC JTC1/SC29/WG11), 18 October 2016 (2016-10-18), XP030067555, Retrieved from the Internet: URL:http://phenix.it-sudparis.eu/mpeg [retrieved on 2019-06-19]
- BUDAGAVI, M.: "OMAF: Metadata for supporting Hotspots in omnidirectional video", 119. MPEG meeting; 17-7-2017 - 21-7-2017; Torino; (Motion Picture Expert Group or ISO/IEC JTC1/SC29/WG11), 10 July 2017 (2017-07-10), XP030069525, Retrieved from the Internet: URL:http://phenix.it-sudparis.eu/mpeg [retrieved on 2019-06-19]
- FAN, Y. et al.: "[OMAF] On multiple viewing positions", 121. MPEG meeting; 22-1-2018 - 26-1-2018; Gwangju; (Motion Picture Expert Group or ISO/IEC JTC1/SC29/WG11), 15 January 2018 (2018-01-15), XP030070391, Retrieved from the Internet: URL:http://phenix.it-sudparis.eu/mpeg [retrieved on 2019-06-19]

## Description

### TECHNICAL FIELD

An example embodiment relates generally to encoding media content, particularly in the context of streaming virtual reality and other audiovisual content.

### BACKGROUND

Virtual reality audiovisual content, such as 360° video and other similar content, has become increasingly popular amongst viewers and content creators who prefer or otherwise enjoy the immersive viewing experience available from such content. This increase in the popularity of virtual reality content has driven viewer demand for streaming virtual reality content that provides a high-quality viewing experience.

Traditionally, only one observation point is supported in a single playback session of virtual reality content. The user is located at the center of a unit sphere and has limited degree of freedom around the center of the unit sphere, but cannot change the observation point. The virtual reality audiovisual content consumed in a single playback session consists of virtual reality audiovisual content from the one observation point. As such, the user experience in conjunction with the consumption of virtual reality audiovisual content is limited by a single observation point that may, in some instances be a substantial distance from or poorly situation relative to an event of interest.

The international patent application WO 2018/046797 A1 discloses how to provide rendering of audiovisual content, such as 360-degree virtual reality content, in a manner that allows for control over whether, and to what degree, the content presented to a viewer should take into account the relative positioning of the content with respect to the viewer. In implementations are presented that allow for situational control over the rendering of content based on an initial observation setup associated with a segment or subsegment of content, the orientation of the viewing device, and/or the manner in which the segment or subsegment is accessed by a playback device.

### BRIEF SUMMARY

A method, apparatus and computer program product as defined by the independent claims are provided for signaling and storage of multiple viewpoint for omnidirectional audiovisual content which enables switching of a viewpoint/observation point.

In one example embodiment, a method is provided that includes receiving an indication associated with an observation setup of a set of transmission units of an audiovisual presentation. The observation setup comprises multiple observation points. The multiple observation points are categorized by one or more observation groups, each observation group comprises one default observation point and one origin point, and multiple observation orientations are associated with the multiple observation points. The method of this example embodiment also includes receiving an indication associated with an intended behavior of a playback device. The method of this example embodiment also includes determining the intended behavior of the playback device. The method of this example embodiment also includes, in response to determining the intended behavior of the playback device, causing a control signal to be generated. The control signal is associated with a rendering operation of the audiovisual presentation on the playback device.

In some example implementations of such a method, the one or more observation point groups comprises one or more spatially related observation point groups, and a set of observation points in each spatially related observation point group has a spatial relationship between the set of observation points. In some example embodiments, the one or more observation point groups comprises one or more logically related observation point groups, and a set of observation points in each logically related observation point group has a pre-defined logical relationship between the set of observation points. In some example embodiments, the multiple observation points comprises one or more static observation points, and each static observation point is associated with one or more tracks mapped to the static observation point. In some example embodiments, the multiple observation points comprise one or more dynamic observation points, and each dynamic observation point is associated with one or more timed metadata tracks. In some example embodiments, the default observation point is the same as the origin observation point.

In another example embodiment, an apparatus is provided that comprises at least one processor and at least one memory including computer program code for one or more programs with the at least one memory and the computer program code configured to, with the at least one processor, cause the apparatus to at least receive an indication associated with an initial observation setup of a set of transmission units of an audiovisual presentation; receive an indication associated with an intended behavior of a playback device; determine the intended behavior of the playback device; and in response to determining the intended behavior of the playback device, cause a control signal to be generated. The control signal is associated with a rendering operation of the audiovisual presentation on the playback device. The observation setup comprises multiple observation points. The multiple observation points are categorized by one or more observation groups, each observation group comprises one default observation point and one origin point, and multiple observation orientations are associated with the multiple observation points.

In some example implementations of such an apparatus, the one or more observation point groups comprises one or more spatially related observation point groups, and a set of observation points in each spatially related observation point group has a spatial relationship between the set of observation points. In some example embodiments, the one or more observation point groups comprises one or more logically related observation point groups, and a set of observation points in each logically related observation point group has a pre-defined logical relationship between the set of observation points. In some example embodiments, the multiple observation points comprises one or more static observation points, and each static observation point is associated with one or more tracks mapped to the static observation point. In some example embodiments, the multiple observation points comprises one or more dynamic observation points, and each dynamic observation point is associated with one or more timed metadata tracks. In some example embodiments, the default observation point is the same as the origin observation point.

In another example embodiment, an apparatus is provided that includes means for receiving an indication associated with an initial observation setup of a set of transmission units of an audiovisual presentation. The apparatus also includes means for receiving an indication associated with an intended behavior of a playback device; and means for determining the intended behavior of the playback device. The apparatus further includes means for in response to determining the intended behavior of the playback device, causing a control signal to be generated. The control signal is associated with a rendering operation of the audiovisual presentation on the playback device. The observation setup comprises multiple observation points. The multiple observation points are categorized by one or more observation groups, each observation group comprises one default observation point and one origin point, and multiple observation orientations are associated with the multiple observation points.

In some example implementations of such an apparatus, the one or more observation point groups comprises one or more spatially related observation point groups, and a set of observation points in each spatially related observation point group has a spatial relationship between the set of observation points. In some example embodiments, the one or more observation point groups comprises one or more logically related observation point groups, and a set of observation points in each logically related observation point group has a pre-defined logical relationship between the set of observation points. In some example embodiments, the multiple observation points comprises one or more static observation points, and each static observation point is associated with one or more tracks mapped to the static observation point. In some example embodiments, the multiple observation points comprises one or more dynamic observation points and each dynamic observation point is associated with one or more timed metadata tracks. In some example embodiments, the default observation point is the same as the origin observation point.

In a further example embodiment, a computer program product is provided that includes at least one non-transitory computer-readable storage medium having computer-executable program code instructions stored therein with the computer-executable program code instructions including program code instructions configured to at least receive an indication associated with an initial observation setup of a set of transmission units of an audiovisual presentation; receive an indication associated with an intended behavior of a playback device; determine the intended behavior of the playback device; and in response to determining the intended behavior of the playback device, cause a control signal to be generated. The control signal is associated with a rendering operation of the audiovisual presentation on the playback device. The rendering operation of the audiovisual presentation on the playback device comprises selecting a portion of the audiovisual presentation. The observation setup comprises multiple observation points. The multiple observation points are categorized by one or more observation groups, each observation group comprises one default observation point and one origin point, and multiple observation orientations are associated with the multiple observation points.

In some example implementations of such a computer program product, the one or more observation point groups comprises one or more spatially related observation point groups, and a set of observation points in each spatially related observation point group has a spatial relationship between the set of observation points. In some example embodiments, the one or more observation point groups comprises one or more logically related observation point groups, and a set of observation points in each logically related observation point group has a pre-defined logical relationship between the set of observation points. In some example embodiments, the multiple observation points comprises one or more static observation points, and each static observation point is associated with one or more tracks mapped to the static observation point. In some example embodiments, the multiple observation points comprise one or more dynamic observation points, and each dynamic observation point is associated with one or more timed metadata tracks. In some example embodiments, the default observation point is the same as the origin observation point.

In yet another example embodiment, a method is provided that includes detecting an observation setup associated with a set of transmission units of an audiovisual presentation; in response to determining whether a condition associated with the observation setup is met, selecting a subset of the transmission units of an audiovisual presentation; and causing a control signal to be generated. The control signal is associated with a rendering operation of the selected subset of the transmission units of the audiovisual presentation on the playback device. The observation setup comprises multiple observation points. The multiple observation points are categorized by one or more observation groups, each observation group comprises one default observation point and one origin point, and multiple observation orientations are associated with the multiple observation points.

In some example implementations of such a method, the one or more observation point groups comprises one or more spatially related observation point groups, and a set of observation points in each spatially related observation point group has a spatial relationship between the set of observation points. In some example embodiments, the one or more observation point groups comprises one or more logically related observation point groups, and a set of observation points in each logically related observation point group has a pre-defined logical relationship between the set of observation points. In some example embodiments, the multiple observation points comprises one or more static observation points, and each static observation point is associated with one or more tracks mapped to the static observation point. In some example embodiments, the multiple observation points comprises one or more dynamic observation points, and each dynamic observation point is associated with one or more timed metadata tracks. In some example embodiments, the default observation point is the same as the origin observation point.

In another example embodiment, an apparatus is provided that includes at least one processor and at least one memory that includes computer program code with the at least one memory and the computer program code configured to, with the at least one processor, cause the apparatus to at least detect an observation setup associated with a set of transmission units of an audiovisual presentation; in response to determining whether a condition associated with the observation setup is met; select a subset of the transmission units of an audiovisual presentation; and cause a control signal to be generated. The control signal is associated with a rendering operation of the selected subset of the transmission units of the audiovisual presentation on the playback device. The observation setup comprises multiple observation points. The multiple observation points are categorized by one or more observation groups, each observation group comprises one default observation point and one origin point, and multiple observation orientations are associated with the multiple observation points.

In some example implementations of such an apparatus, the one or more observation point groups comprises one or more spatially related observation point groups, and a set of observation points in each spatially related observation point group has a spatial relationship between the set of observation points. In some example embodiments, the one or more observation point groups comprises one or more logically related observation point groups, and a set of observation points in each logically related observation point group has a pre-defined logical relationship between the set of observation points. In some example embodiments, the multiple observation points comprises one or more static observation points, and each static observation point is associated with one or more tracks mapped to the static observation point. In some example embodiments, the multiple observation points comprises one or more dynamic observation points, and each dynamic observation point is associated with one or more timed metadata tracks. In some example embodiments, the default observation point is the same as the origin observation point.

In another example embodiment, an apparatus is provided that includes means for detecting an observation setup associated with a set of transmission units of an audiovisual presentation. The apparatus also includes means for in response to determining whether a condition associated with the observation setup is met, selecting a subset of the transmission units of an audiovisual presentation. The apparatus further includes means for causing a control signal to be generated. The control signal is associated with a rendering operation of the selected subset of the transmission units of the audiovisual presentation on the playback device. The observation setup comprises multiple observation points. The multiple observation points are categorized by one or more observation groups, each observation group comprises one default observation point and one origin point, and multiple observation orientations are associated with the multiple observation points.

In some example implementations of such an apparatus, the one or more observation point groups comprises one or more spatially related observation point groups, and a set of observation points in each spatially related observation point group has a spatial relationship between the set of observation points. In some example embodiments, the one or more observation point groups comprises one or more logically related observation point groups, and a set of observation points in each logically related observation point group has a pre-defined logical relationship between the set of observation points. In some example embodiments, the multiple observation points comprises one or more static observation points, and each static observation point is associated with one or more tracks mapped to the static observation point. In some example embodiments, the multiple observation points comprises one or more dynamic observation points, and each dynamic observation point is associated with one or more timed metadata tracks. In some example embodiments, the default observation point is the same as the origin observation point.

In yet another example embodiment, a computer program product is provided that includes at least one non-transitory computer-readable storage medium having computer-executable program code instructions stored therein with the computer-executable program code instructions including program code instructions configured to at least detect an observation setup associated with a set of transmission units of an audiovisual presentation; in response to determining whether a condition associated with the observation setup is met, select a subset of the transmission units of an audiovisual presentation; and cause a control signal to be generated. The control signal is associated with a rendering operation of the selected subset of the transmission units of the audiovisual presentation on the playback device. The observation setup comprises multiple observation points. The multiple observation points are categorized by one or more observation groups, each observation group comprises one default observation point and one origin point, and multiple observation orientations are associated with the multiple observation points.

In some example implementations of such a computer program product, the one or more observation point groups comprises one or more spatially related observation point groups, and a set of observation points in each spatially related observation point group has a spatial relationship between the set of observation points. In some example embodiments, the one or more observation point groups comprises one or more logically related observation point groups, and a set of observation points in each logically related observation point group has a pre-defined logical relationship between the set of observation points. In some example embodiments, the multiple observation points comprises one or more static observation points, and each static observation point is associated with one or more tracks mapped to the static observation point. In some example embodiments, the multiple observation points comprises one or more dynamic observation points, and each dynamic observation point is associated with one or more timed metadata tracks. In some example embodiments, the default observation point is the same as the origin observation point.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
Figure 1 depicts an example system environment in which implementations in accordance with an example embodiment of the present invention may be performed;
Figure 2 is a block diagram of an apparatus that may be specifically configured in accordance with an example embodiment of the present invention;
Figure 3 is a graphical representation of terms referenced in connection with describing some of the example embodiments contained herein;
Figure 4 is another graphical representation of terms referenced in connection with describing some of the example embodiments contained herein;
Figure 5 is a flowchart illustrating a set of operations performed, such as by the apparatus of Figure 2, in accordance with an example embodiment of the present invention;
Figure 6 is a flowchart illustrating a set of operations performed, such as by the apparatus of Figure 2, in accordance with an example embodiment of the present invention;
Figure 7 is a graphical representation of terms referenced in connection with describing some of the example embodiments contained herein;
Figure 8 is another graphical representation of terms referenced in connection with describing some of the example embodiments contained herein;
Figure 9 is another graphical representation of terms referenced in connection with describing some of the example embodiments contained herein;
Figure 10 is a block diagram illustrating an example implementation performed in the context of an end-to-end audio-visual virtual reality application in accordance with an example embodiment of the present invention; and
Figure 11 is a flowchart illustrating a set of operations performed, such as by the apparatus of Figure 2, in accordance with an example embodiment of the present invention.

### DETAILED DESCRIPTION

Some embodiments will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein, a "computer-readable storage medium," which refers to a non-transitory physical storage medium (e.g., volatile or non-volatile memory device), can be differentiated from a "computer-readable transmission medium," which refers to an electromagnetic signal.

As used herein, the term "audiovisual presentation" refers to any combination of video and audio tracks presented to a user during a playback.

As used herein, the term "mapping" refers to either a process by which image data on a planar surface according to a projection is mapped to a two-dimensional plane, or to the image frame resulting from the process, depending on the context.

As used herein, the term "observation orientation" refers to an orientation being rendered. In many contexts, this is usually an orientation relative to the orientation of a head-mounted display used for rendering content.

As used herein the term "observation point" refers to a volume in a three-dimensional space for virtual reality audio/video acquisition or playback. An observation point is trajectory, such as a circle, a region, or a volume, around the center point of a device or rig used for virtual reality audio/video acquisition and the position of the observer's head in the three-dimensional space in which the audio and video tracks are located. In some cases, an observer's head position is tracked and the rendering is adjusted for head movements in addition to head rotations, and then an observation point may be understood to be an initial or reference position of the observer's head. In implementations utilizing DASH (Dynamic adaptive streaming over HTTP), each observation point may be defined as a viewpoint by a viewpoint property descriptor. The definition may be stored in ISOBMFF or OMAF type of file format. The delivery could be HLS (HTTP Live Streaming), RTSP/RTP (Real Time Streaming Protocol/Real-time Transport Protocol) streaming in addition to DASH.

As used herein, the term "observation point group" refers to one or more observation points that are either spatially related or logically related. The observation points in an observation point group may be defined based on relative positions defined for each observation point with respect to a designated origin point of the group. Each observation point group may also include a default observation point that reflects a default playback starting point when a user starts to consume audiovisual content in the observation point group, without choosing a particular observation point, for playback. The default observation point may be the same as the designated origin point. In some embodiments, one observation point may be included in multiple observation point groups.

As used herein, the term "spatially related observation point group" refers to observation points which have content that has a spatial relationship between them. For example, content captured by VR cameras at different locations in the same basketball court or a music concert captured from different locations on the stage.

As used herein, the term "logically related observation point group" refers to related observation points which do not have a clear spatial relationship, but are logically related. The relative position of logically related observation points are described based on the creative intent. For example, two observation points that are members of a logically related observation point group may correspond to content from the performance area and the dressing room. Another example could be two observation points from the dressing rooms of the two competing teams that form a logically related observation point group to permit users to traverse between both of the teams to see the player reactions.

As used herein, the term "static observation point" refers to an observation point that remains stationary during one virtual reality audio/video acquisition and playback session. For example, a static observation point may correspond with virtual reality audio/video acquisition performed by a fixed camera.

As used herein, the term "dynamic observation point" refers to an observation point that does not remain stationary during one virtual reality audio/video acquisition and playback session. For example, a dynamic observation point may correspond with virtual reality audio/video acquisition performed by a moving camera on rails or a moving camera on a flying drone.

As used herein, the term "observation setup" refers to a setup of one or more observation points and observation orientations. In the context of a presentation that has only one observation point available, the observation point need not be explicitly indicated or concluded for an observation setup. If a presentation that has multiple observation points available, the observation points will be setup based on one or more observation point groups, and the spatial or logical relationship between observation points in each observation point group will be indicated in the observation setup.

As used herein, the term "projection" or "VR projection" refers to either a process by which a spherical image is projected onto a geometry, such as a planar surface or a cube, or the image frame resulting from the process. Examples of VR projections include equirectangular panorama and cubemap projections. In some contexts, the term projection may be understood to additionally comprise a mapping of a three-dimensional geometry, such as a cube map, onto one or more two-dimensional planes. Such mapping may comprise packing of a multitude of two-dimensional planes into the same frame (such as one two-dimensional plane, for example).

As used herein, the term "viewport" or "VR viewport" refers to a subset of an omnidirectional field of view. The term "viewport" may refer to a subset of the omnidirectional visual content currently being displayed for a user and/or a subset of the omnidirectional visual content that is coded with distinction (such as quality distinction or as a separable part, or a motion-constrained tile set, for example) from the remaining visual content. A distinction between these two definitions may be provided through a qualifier; such that the former may be referred to as a rendered viewport while the latter may be referred to as a coded viewport. In some cases a viewport may be represented by an orientation and a field of view, while in some other cases a viewport may be represented by an area, such as a rectangle, within a two-dimensional coordinate system for a particular projection format. An example of the latter is a rectangle within an equirectangular panorama image. A viewport may comprise several constituent viewports, which jointly form the viewport and may have different properties, such as picture quality.

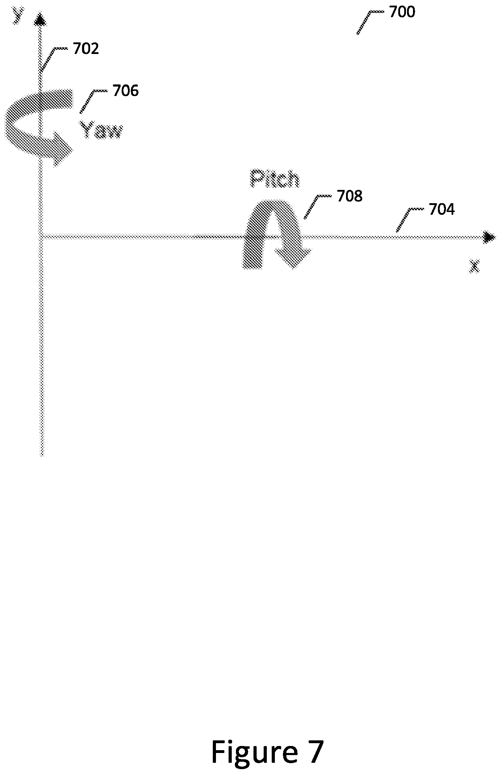

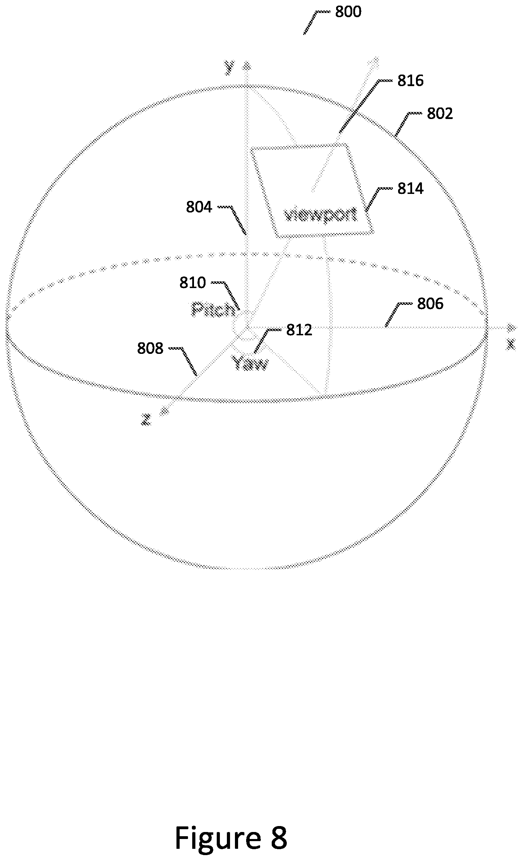

As used herein, an "orientation" (such as an orientation of a viewport, for example) may be represented by angular coordinates of a coordinate system. Angular coordinates may, for example, be called yaw, pitch, and roll, indicating the rotation angles around certain coordinate axes, such as y, x and z, respectively. Yaw, pitch, and roll may be used, for example, to indicate an orientation of a viewport. In some contexts, viewport orientation may be constrained; for example, roll may be constrained to be 0. In some such examples, and in other examples, yaw and pitch indicate the Euler angle of the center point of the viewport in degrees. In most contexts, yaw is applied prior to pitch, such that yaw rotates around the Y-axis, and pitch around the X-axis. Likewise, in most contexts, the angles increase clockwise as viewed when looking away from the origin. With reference to Figure 7, axes 700 include a Y-axis 702 and an X-axis 704. As shown in Figure 7, yaw 706 is depicted as a rotation around Y-axis 702, and pitch 708 is depicted as a rotation around X-axis 704. With reference to Figure 8, axes 800 are used to map a three-dimensional space 802 via Y-axis 804, X-axis 806, and Z-axis 808. As shown in Figure 8, pitch 810 and yaw 812 can be used to indicate the Euler angle of the center point of the viewport 814, which lies along vector 816.

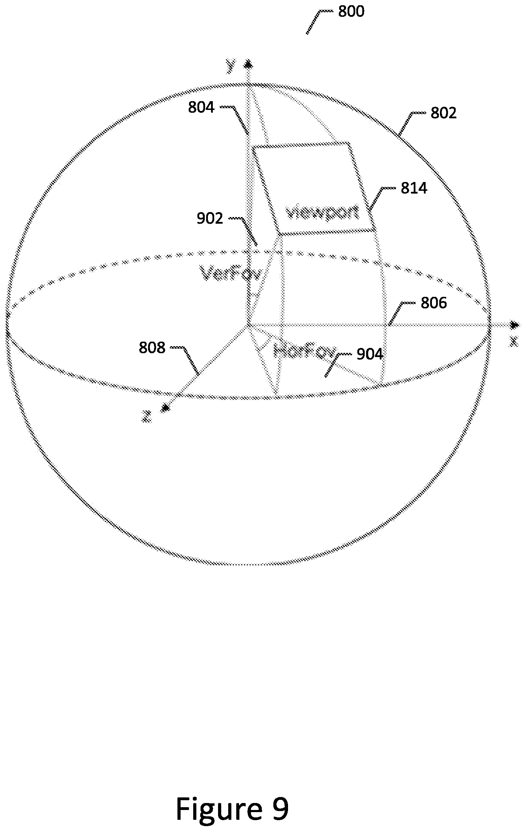

In some example implementations, a field of view (FOV) of a viewport may be represented by a horizontal FOV (HorFov) and a vertical FOV (VerFov). In some contexts HorFov and VerFov may be defined, for example, such that HorFov indicates the horizontal field of view of the viewport in degrees and VerFov indicates the vertical field of view of the viewport in degrees. An example depiction of the use of HorFov and VerFov to represent the FOV of a viewport is presented in Figure 9. In Figure 9, the same three dimensional space 802 from Figure 8 is mapped with axes 800 (including Y-axis 804, X-axis 806, and Z-axis 808). Viewport 814 is likewise placed within space 802. Rather than using pitch and/or yaw to express the Euler angle of the centerpoint of the viewport 814, Figure 9 depicts an example in which it is possible to represent the field of view of the viewport 814 as HorFov 902 and a VerFov 904.

As used herein, the term "global coordinate system" may refer to a three-dimensional coordinate system as described that has an origin in an observation point.

As used herein, the term "random access" may refer to the ability of a decoder to start decoding a stream at a point other than the beginning of the stream and recover an exact or approximate reconstructed media signal, such as a representation of the decoded pictures. A random access point and a recovery point may be used to characterize a random access operation. A random access point may be defined as a location in a media stream, such as an access unit or a coded picture within a video bitstream, where decoding can be initiated. A recovery point may be defined as a first location in a media stream or within the reconstructed signal characterized in that all media, such as decoded pictures, at or subsequent to a recovery point in output order are correct or approximately correct in content, when the decoding has started from the respective random access point. If the random access point is the same as the recovery point, the random access operation is instantaneous; otherwise, it may be gradual.

Random access points enable, for example, seek, fast forward play, and fast backward play operations in locally stored media streams as well as in media streaming. In contexts involving on-demand streaming, servers can respond to seek requests by transmitting data starting from the random access point that is closest to (and in many cases preceding) the requested destination of the seek operation and/or decoders can start decoding from the random access point that is closest to (and in many cases preceding) the requested destination of the seek operation. Switching between coded streams of different bit-rates is a method that is used commonly in unicast streaming to match the transmitted bitrate to the expected network throughput and to avoid congestion in the network. Switching to another stream is possible at a random access point. Furthermore, random access points enable tuning in to a broadcast or multicast. In addition, a random access point can be coded as a response to a scene cut in the source sequence or as a response to an intra picture update request.

Some example implementations contemplate the use of media file format standards that include, but are not limited to, ISO base media file format (ISO/IEC 14496-12, which may be abbreviated ISOBMFF), MPEG-4 file format (ISO/IEC 14496-14, also known as the MP4 format), file format for NAL (Network Abstraction Layer) unit structured video (ISO/IEC 14496-15) and 3GPP file format (3GPP TS 26.244, also known as the 3GP format). The ISO base media file format is the base for derivation of all the above mentioned file formats (excluding the ISO base media file format itself).

The observation point spatial relationship and grouping information can be signaled as part of the file format (e.g., based on ISOBMFF) as well as signaled with the media data delivered to the client (e.g., as part of the DASH MPD). For observation point groups comprised of static observation points, the information can be stored in the file format and delivered for streaming as part of the initialization segment for the corresponding tracks (e.g., streaming using DASH). This can be done by defining a new **ViewpointBox('vpbx')** to be contained inside the **visualsampleentry** of the video track. For observation point groups comprised of dynamic observation points, a separate timed metadata track is used to describe the spatial relationship between observation points. In some alternative embodiments, even if an observation point group comprises dynamic observation points, relationship between two static observation points are still stored in the file format and delivered for streaming. In case of observation points having both ViewpointBox and timed metadata, there can be a policy for one of these to override the other. In some embodiments, media tracks with a ViewpointBox shall not be associated with a timed metadata track.

Some concepts, structures, and specifications of ISOBMFF are described below as an example of a container file format, based on which the embodiments may be implemented. However, the aspects of the invention are not limited to ISOBMFF, but rather the description is given for one possible basis on top of which the invention may be partly or fully realized.

One building block in the ISOBMFF is called a box. Each box may have a header and a payload. The box header indicates the type of the box and the size of the box, typically in terms of bytes. A box may enclose other boxes, and the ISO file format specifies which box types are allowed within a box of a certain type. Furthermore, the presence of some boxes may be mandatory in each file, while the presence of other boxes may be optional. Additionally, for some box types, it may be allowable to have more than one box present in a file. Thus, the ISOBMFF may be considered to specify a hierarchical structure of boxes. Each box of the ISO base media file may be identified by a four-character code (4CC, fourCC). A four-character code may interchangeably be represented by a 32-bit unsigned integer (by assuming a certain conversion of characters to 8-bit values, a certain bit endianness, and a certain byte endianness). The header may provide information about the type and size of the box.

According to the ISOBMFF, a file may include media data and metadata that may be enclosed in separate boxes. In an example embodiment, the media data may be provided in a media data (mdat) box and the movie (moov) box may be used to enclose the metadata. In some cases, for a file to be operable, both of the mdat and moov boxes must be present. The movie (moov) box may include one or more tracks, and each track may reside in one corresponding track (trak) box. Each track is associated with a handler, identified by a four-character code, specifying the track type. Video, audio, and image sequence tracks can be collectively called media tracks, and they contain an elementary media stream. Other track types comprise hint tracks and timed metadata tracks. Tracks comprise samples, such as audio or video frames. A media track refers to samples (which may also be referred to as media samples) formatted according to a media compression format (and its encapsulation to the ISOBMFF). A hint track refers to hint samples, containing cookbook instructions for constructing packets for transmission over an indicated communication protocol. The cookbook instructions may include guidance for packet header construction and may include packet payload construction. In the packet payload construction, data residing in other tracks or items may be referenced. As such, for example, data residing in other tracks or items may be indicated by a reference as to which piece of data in a particular track or item is instructed to be copied into a packet during the packet construction process. A timed metadata track may refer to samples describing referred media and/or hint samples. For the presentation of one media type, one media track may be selected.

The 'trak' box contains a Sample Table box. The Sample Table box may include, for example, all the time and data indexing of the media samples in a track. Typically, the Sample Table box is required to contain a Sample Description box. The Sample Description box typically also includes an entry count field, specifying the number of sample entries included in the box. In most implementations, the Sample Description box is required to contain at least one sample entry. The sample entry format depends on the handler type for the track. Sample entries give detailed information about the coding type used and any initialization information needed for that coding.

The movie fragment feature may enable splitting the metadata that otherwise might reside in the movie box into multiple pieces. Each piece may correspond to a certain period of time of a track. In other words, the movie fragment feature may enable interleaving file metadata and media data. Consequently, the size of the movie box may be limited and the use cases mentioned above may be realized.

In some examples, the media samples for the movie fragments may reside in an mdat box. For the metadata of the movie fragments, however, a moof box may be provided. The moof box may include the information for a certain duration of playback time that would previously have been in the moov box. The moov box may still represent a valid movie on its own, but in addition, it may include an mvex box indicating that movie fragments will follow in the same file. The movie fragments may extend the presentation that is associated to the moov box in time.

Within the movie fragment there may be a set of track fragments, including anywhere from zero to a plurality per track. The track fragments may in turn include anywhere from zero to a plurality of track runs, each of which document is a contiguous run of samples for that track (and hence are similar to chunks). Within these structures, many fields are optional and can be defaulted. The metadata that may be included in the moof box may be limited to a subset of the metadata that may be included in a moov box and may be coded differently in some cases. Details regarding the boxes that can be included in a moof box may be found from the ISOBMFF specification. A self-contained movie fragment may be defined to consist of a moof box and an mdat box that are consecutive in the file order and where the mdat box contains the samples of the movie fragment (for which the moof box provides the metadata) and does not contain samples of any other movie fragment (i.e. any other moof box).

A sample grouping in the ISOBMFF and its derivatives, such as the file format for NAL unit structured video (ISO/IEC 14496-15), may be defined as an assignment of each sample in a track to be a member of one sample group, based on a grouping criterion. A sample group in a sample grouping is not limited to being contiguous samples and may contain non-adjacent samples. As there may be more than one sample grouping for the samples in a track, each sample grouping may have a type field to indicate the type of grouping. Sample groupings may be represented by two linked data structures: (1) a SampleToGroup box (sbgp box) represents the assignment of samples to sample groups; and (2) a SampleGroupDescription box (sgpd box) contains a sample group entry for each sample group describing the properties of the group. There may be multiple instances of the SampleToGroup and SampleGroupDescription boxes based on different grouping criteria. These may be distinguished by a type field used to indicate the type of grouping. The 'sbgp' and the 'sgpd' boxes may be linked using the value of grouping_type and, in some versions of the boxes, also the value of grouping_type_parameter. The 'sbgp' box indicates the index of the sample group description entry that a particular sample belongs to.

The Matroska file format is capable of (but not limited to) storing any of video, audio, picture, or subtitle tracks in one file. Matroska file extensions include .mkv for video (with subtitles and audio), .mk3d for stereoscopic video, .mka for audio-only files, and .mks for subtitles only. Matroska may be used as a basis format for derived file formats, such as WebM.

Matroska uses Extensible Binary Meta Language (EBML) as a basis. EBML specifies a binary and octet (byte) aligned format inspired by the principle of XML. EBML itself is a generalized description of the technique of binary markup. A Matroska file consists of Elements that make up an EBML "document." Elements incorporate an Element ID, a descriptor for the size of the element, and the binary data itself. Elements can be nested.

A Segment Element of Matroska is a container for other top-level (level 1) elements. A Matroska file may comprise (but is not limited to be composed of) one Segment. Multimedia data in Matroska files is organized in Clusters (or Cluster Elements), each containing typically a few seconds of multimedia data. A Cluster comprises BlockGroup elements, which in turn comprise Block Elements. A Cues Element comprises metadata which may assist in random access or seeking and may include file pointers or respective timestamps for seek points.

A uniform resource identifier (URI) may be defined as a string of characters used to identify a name of a resource. Such identification enables interaction with representations of the resource over a network, using specific protocols. A URI is defined through a scheme specifying a concrete syntax and associated protocol for the URI. The uniform resource locator (URL) and the uniform resource name (URN) are forms of URI. A URL may be defined as a URI that identifies a web resource and specifies the means of acting upon or obtaining the representation of the resource, specifying both its primary access mechanism and network location. A URN may be defined as a URI that identifies a resource by name in a particular namespace. A URN may be used for identifying a resource without implying its location or how to access it.

Hypertext Transfer Protocol (HTTP) has been widely used for the delivery of real-time multimedia content over the Internet, such as in video streaming applications. Several commercial solutions for adaptive streaming over HTTP, such as Microsoft^{®} Smooth Streaming, Apple^{®} Adaptive HTTP Live Streaming and Adobe^{®} Dynamic Streaming, have been launched as well as standardization projects have been carried out. Adaptive HTTP streaming (AHS) was first standardized in Release 9 of 3rd Generation Partnership Project (3GPP) packet-switched streaming (PSS) service (3GPP TS 26.234 Release 9: "Transparent end-to-end packet-switched streaming service (PSS); protocols and codecs"). MPEG took 3GPP AHS Release 9 as a starting point for the MPEG DASH standard (ISO/IEC 23009-1: "Dynamic adaptive streaming over HTTP (DASH)-Part 1: Media presentation description and segment formats"). MPEG DASH and 3GP-DASH are technically close to each other and may therefore be collectively referred to as DASH. Some concepts, formats, and operations of DASH are described below as an example of a video streaming system, wherein the embodiments may be implemented. The aspects of the invention are not limited to DASH, but rather the description is given for one possible basis on top of which the invention may be partly or fully realized.

In DASH, the multimedia content may be stored on an HTTP server and may be delivered using HTTP. The content may be stored on the server in two parts: Media Presentation Description (MPD), which describes a manifest of the available content, its various alternatives, their URL addresses, and other characteristics; and segments, which contain the actual multimedia bitstreams in the form of chunks, in a single or multiple files. The MPD provides the necessary information for clients to establish a dynamic adaptive streaming over HTTP. The MPD contains information describing media presentation, such as an HTTP-uniform resource locator (URL) of each Segment to make a GET Segment request. To play the content, the DASH client may obtain the MPD by using HTTP, email, thumb drive, broadcast, or other transport methods, for example. By parsing the MPD, the DASH client may become aware of the program timing, media-content availability, media types, resolutions, minimum and maximum bandwidths, and the existence of various encoded alternatives of multimedia components, accessibility features and required digital rights management (DRM), media-component locations on the network, and other content characteristics. Using this information, the DASH client may select the appropriate encoded alternative and start streaming the content by fetching the segments using HTTP GET requests, for example. After appropriate buffering to allow for network throughput variations, the client may continue fetching the subsequent segments and also monitor the network bandwidth fluctuations. The client may decide how to adapt to the available bandwidth by fetching segments of different alternatives (with lower or higher bitrates) to maintain an adequate buffer.

In the context of DASH, the following definitions may be used: A media content component or a media component may be defined as one continuous component of the media content with an assigned media component type that can be encoded individually into a media stream. Media content may be defined as one media content period or a contiguous sequence of media content periods. Media content component type may be defined as a single type of media content such as audio, video, or text. A media stream may be defined as an encoded version of a media content component.

In DASH, a hierarchical data model is used to structure a media presentation as follows. A media presentation consists of a sequence of one or more Periods, each Period contains one or more Groups, each Group contains one or more Adaptation Sets, each Adaptation Sets contains one or more Representations, each Representation consists of one or more Segments. A Group may be defined as a collection of Adaptation Sets that are not expected to be presented simultaneously. An Adaptation Set may be defined as a set of interchangeable encoded versions of one or several media content components. A Representation is one of the alternative choices of the media content or a subset thereof typically differing by the encoding choice, such as by bitrate, resolution, language, codec, or the like, for example. The Segment contains a certain duration of media data, and metadata to decode and present the included media content. A Segment is identified by a URI and can typically be requested by a HTTP GET request. A Segment may be defined as a unit of data associated with an HTTP-URL and optionally a byte range that are specified by an MPD.

The DASH MPD complies with Extensible Markup Language (XML) and is therefore specified through elements and attributes as defined in XML. The MPD may be specified using the following conventions: Elements in an XML document may be identified by an upper-case first letter and may appear in bold face as **Element.** To express that an element **Element1** is contained in another element **Element2,** one may write **Element2.Element1.** If an element's name consists of two or more combined words, camel-casing may be used, such as **ImportantElement,** for example. Elements may be present either exactly once, or the minimum and maximum occurrence may be defined by <minOccurs> ... <maxOccurs>. Attributes in an XML document may be identified by a lower-case first letter as well as they may be preceded by a '@'-sign, e.g. @attribute, for example. To point to a specific attribute @attribute contained in an element **Element,** one may write Element@attribute. If an attribute's name consists of two or more combined words, camel-casing may be used after the first word, such as @veryImportantAttribute, for example. Attributes may have assigned a status in the XML as mandatory (M), optional (O), optional with default value (OD) and conditionally mandatory (CM).

In DASH, all descriptor elements are typically structured in the same way, in that they contain a @schemeIdUri attribute that provides a URI to identify the scheme and an optional attribute @value and an optional attribute @id. The semantics of the element are specific to the scheme employed. The URI identifying the scheme may be a URN or a URL. Some descriptors are specified in MPEG-DASH (ISO/IEC 23009-1), while descriptors can additionally or alternatively be specified in other specifications. When specified in specifications other than MPEG-DASH, the MPD does not provide any specific information on how to use descriptor elements. It is up to the application or specification that employs DASH formats to instantiate the description elements with appropriate scheme information. Applications or specifications that use one of these elements define a Scheme Identifier in the form of a URI and the value space for the element when that Scheme Identifier is used. The Scheme Identifier appears in the @schemeIdUri attribute. In the case that a simple set of enumerated values are required, a text string may be defined for each value and this string may be included in the @value attribute. If structured data is required then any extension element or attribute may be defined in a separate namespace. The @id value may be used to refer to a unique descriptor or to a group of descriptors. In the latter case, descriptors with identical values for the attribute @id may be required to be synonymous, i.e. the processing of one of the descriptors with an identical value for @id is sufficient. Two elements of type DescriptorType are *equivalent,* if the element name, the value of the @schemeIdUri and the value of the @value attribute are equivalent. If the @schemeIdUri is a URN, then equivalence may refer to lexical equivalence as defined in clause 5 of RFC 2141. If the @schemeIdUri is a URL, then equivalence may refer to equality on a character-for-character basis as defined in clause 6.2.1 of RFC3986. If the @value attribute is not present, equivalence may be determined by the equivalence for @schemeIdUri only. Attributes and element in extension namespaces might not be used for determining equivalence. The @id attribute may be ignored for equivalence determination.

MPEG-DASH specifies descriptors EssentialProperty and SupplementalProperty. For the element EssentialProperty the Media Presentation author expresses that the successful processing of the descriptor is essential to properly use the information in the parent element that contains this descriptor unless the element shares the same @id with another EssentialProperty element. If EssentialProperty elements share the same @id, then processing one of the EssentialProperty elements with the same value for @id is sufficient. At least one EssentialProperty element of each distinct @id value is expected to be processed. If the scheme or the value for an EssentialProperty descriptor is not recognized the DASH client is expected to ignore the parent element that contains the descriptor. Multiple EssentialProperty elements with the same value for @id and with different values for @id may be present in an MPD.

For the element SupplementalProperty the Media Presentation author expresses that the descriptor contains supplemental information that may be used by the DASH client for optimized processing. If the scheme or the value for a SupplementalProperty descriptor is not recognized the DASH client is expected to ignore the descriptor. Multiple SupplementalProperty elements may be present in an MPD.

MPEG-DASH specifies a **Viewpoint** element that is formatted as a property descriptor. The @schemeIdUri attribute of the **Viewpoint** element is used to identify the viewpoint scheme employed. Adaptation Sets containing non-equivalent **Viewpoint** element values contain different media content components. The **Viewpoint** elements may equally be applied to media content types that are not video. Adaptation Sets with equivalent **Viewpoint** element values are intended to be presented together. This handling should be applied equally for recognized and unrecognized @schemeIdUri values.

SRD (Spatial Relationship Description) is specified in the normative Annex H of MPEG-DASH. The following contains some excerpts of the SRD specification.

The SRD scheme allows Media Presentation Description authors to express spatial relationships between Spatial Objects. A Spatial Object is represented by either an Adaptation Set or a Sub-Representation. As an example, a spatial relationship may express that a video represents a spatial part of another full-frame video (e.g. a region of interest, or a tile).

The SupplementalProperty and/or EssentialProperty descriptors with @schemeIdUri equal to "urn:mpeg:dash:srd:2014" are used to provide spatial relationship information associated to the containing Spatial Object. SRD shall be contained exclusively in these two MPD elements (AdaptationSet and SubRepresentation).

Sub-Representation level SRDs may be used to represent Spatial Objects in one Representation such as HEVC tiling streams. In that case, SRD descriptors may be present at Adaptation Set as well as Sub-Representation levels.

The @value of the SupplementalProperty or EssentialProperty elements using the SRD scheme is a comma separated list of values for SRD parameters. The SRD parameters source_id, object_x, object_y, object_width, and object_height are required to be present and the SRD parameters total_width, total_height, and spatial_set_id are conditionally or optionally present.

source_id is a non-negative integer in decimal representation providing the identifier for the source of the content. The source_id parameter provides a unique identifier, within the Period, for the source of the content. It implicitly defines a coordinate system associated to this source. This coordinate system uses an arbitrary origin (0; 0); the x-axis is oriented from left to right and the y-axis from top to bottom. All SRD sharing the same source_id value have the same origin and axes orientations. Spatial relationships for Spatial Objects using SRD with different source_id values are undefined.

For a given source_id value, a reference space is defined, corresponding to the rectangular region encompassing the entire source content, whose top-left corner is at the origin of the coordinate system. The total_width and total_height values in a SRD provide the size of this reference space expressed in arbitrary units. total_width is a non-negative integer in decimal representation expressing the width of the reference space in arbitrary units. total_height is a non-negative integer in decimal representation expressing the height of the reference space in arbitrary units. It is allowed that there is no Spatial Object in the MPD that covers the entire source of the content, e.g. when the entire source content is represented by two separate videos.

object_x is a non-negative integer in decimal representation expressing the horizontal position of the top-left corner of the Spatial Object in arbitrary units. object_y is a non-negative integer in decimal representation expressing the vertical position of the top-left corner of the Spatial Object in arbitrary units. object_width is a non-negative integer in decimal representation expressing the width of the Spatial Object in arbitrary units. object_height is a non-negative integer in decimal representation expressing the height of the Spatial Object in arbitrary units. The object_x and object_y parameters (respectively object_width and object_height) express 2D positions (respectively 2D sizes) of the associated Spatial Object in the coordinate system associated to the source. The values of the object_x, object_y, object_width, and object_height parameters are relative to the values of the total_width and total_height parameters, as defined above. Positions (object_x, object_y) and sizes (object_width, object_height) of SRDs sharing the same source_id value may be compared after taking into account the size of the reference space, i.e. after the object_x and object_width values are divided by the total_width value and the object_y and object_height values divided by the total_height value of their respective descriptors. Different total_width and total_height values may be used in different descriptors to provide positions and sizes information in different units for the same reference space.

spatial_set_id is a non-negative integer in decimal representation providing an identifier for a group of Spatial Objects. When not present, the Spatial Object associated to this descriptor does not belong to any spatial set and no spatial set information is given. MPD authors can express, using the spatial_set_id parameter, that some Spatial Objects, within a given source_id, have a particular spatial relationship. For instance, an MPD author may group all Adaptation Sets corresponding to tiles at a same resolution level. This way, the spatial_set_id parameter may be used by the DASH client to quickly select spatially related Spatial Objects.

An Initialization Segment may be defined as a Segment containing metadata that is necessary to present the media streams encapsulated in Media Segments. In ISOBMFF based segment formats, an Initialization Segment may comprise the Movie Box ('moov') which might not include metadata for any samples, i.e. any metadata for samples is provided in 'moof boxes.

A Media Segment contains certain duration of media data for playback at a normal speed, such duration is referred as Media Segment duration or Segment duration. The content producer or service provider may select the Segment duration according to the desired characteristics of the service. For example, a relatively short Segment duration may be used in a live service to achieve a short end-to-end latency. The reason is that Segment duration is typically a lower bound on the end-to-end latency perceived by a DASH client since a Segment is a discrete unit of generating media data for DASH. Content generation is typically done such a manner that a whole Segment of media data is made available for a server. Furthermore, many client implementations use a Segment as the unit for GET requests. Thus, in typical arrangements for live services a Segment can be requested by a DASH client only when the whole duration of Media Segment is available as well as encoded and encapsulated into a Segment. For on-demand service, different strategies of selecting Segment duration may be used.

A Segment may be further partitioned into Subsegments to enable downloading segments in multiple parts, for example. Subsegments may be required to contain complete access units. Subsegments may be indexed by Segment Index box, which contains information to map presentation time range and byte range for each Subsegment. The Segment Index box may also describe subsegments and stream access points in the segment by signaling their durations and byte offsets. A DASH client may use the information obtained from Segment Index box(es) to make a HTTP GET request for a specific Subsegment using byte range HTTP request. If a relatively long Segment duration is used, then Subsegments may be used to keep the size of HTTP responses reasonable and flexible for bitrate adaptation. The indexing information of a segment may be put in the single box at the beginning of that segment, or spread among many indexing boxes in the segment. Different methods of spreading are possible, such as hierarchical, daisy chain, and hybrid, for example. This technique may avoid adding a large box at the beginning of the segment and therefore may prevent a possible initial download delay.

Sub-Representations are embedded in regular Representations and are described by the **SubRepresentation** element. **SubRepresentation** elements are contained in a **Representation** element. The **SubRepresentation** element describes properties of one or several media content components that are embedded in the Representation. It may for example describe the exact properties of an embedded audio component (such as codec, sampling rate, etc., for example), an embedded sub-title (such as codec, for example) or it may describe some embedded lower quality video layer (such as some lower frame rate, or otherwise, for example). Sub-Representations and Representation share some common attributes and elements. In case the @level attribute is present in the **SubRepresentation** element, the following applies:
- Sub-Representations provide the ability for accessing a lower quality version of the Representation in which they are contained. In this case, Sub-Representations for example allow extracting the audio track in a multiplexed Representation or may allow for efficient fast-forward or rewind operations if provided with lower frame rate;
- The Initialization Segment and/or the Media Segments and/or the Index Segments shall provide sufficient information such that the data can be easily accessed through HTTP partial GET requests. The details on providing such information are defined by the media format in use.
- When ISOBMFF Segments are used, the following applies:
   ∘ The Initialization Segment contains the Level Assignment box.
   ∘ The Subsegment Index box ('ssix') is present for each Subsegment.
   ∘ The attribute @level specifies the level to which the described Sub-Representation is associated to in the Subsegment Index. The information in Representation, Sub-Representation and in the Level Assignment ('leva') box contains information on the assignment of media data to levels.
   ∘ Media data should have an order such that each level provides an enhancement compared to the lower levels.

If the @level attribute is absent, then the SubRepresentation element is solely used to provide a more detailed description for media streams that are embedded in the Representation.

The ISOBMFF includes the so-called level mechanism to specify subsets of the file. Levels follow the dependency hierarchy so that samples mapped to level n may depend on any samples of levels m, where m <= n, and do not depend on any samples of levels p, where p > n. For example, levels can be specified according to temporal sub-layer (e.g., TemporalId of HEVC). Levels may be announced in the Level Assignment ('leva') box contained in the Movie Extends ('mvex') box. Levels cannot be specified for the initial movie. When the Level Assignment box is present, it applies to all movie fragments subsequent to the initial movie. For the context of the Level Assignment box, a fraction is defined to consist of one or more Movie Fragment boxes and the associated Media Data boxes, possibly including only an initial part of the last Media Data Box. Within a fraction, data for each level appears contiguously. Data for levels within a fraction appears in increasing order of level value. All data in a fraction is assigned to levels. The Level Assignment box provides a mapping from features, such as scalability layers or temporal sub-layers, to levels. A feature can be specified through a track, a sub-track within a track, or a sample grouping of a track. For example, the Temporal Level sample grouping may be used to indicate a mapping of the pictures to temporal levels, which are equivalent to temporal sub-layers in HEVC. That is, HEVC pictures of a certain TemporalId value may be mapped to a particular temporal level using the Temporal Level sample grouping (and the same can be repeated for all TemporalId values). The Level Assignment box can then refer to the Temporal Level sample grouping in the indicated mapping to levels.

The Subsegment Index box ('ssix') provides a mapping from levels (as specified by the Level Assignment box) to byte ranges of the indexed subsegment. In other words, this box provides a compact index for how the data in a subsegment is ordered according to levels into partial subsegments. It enables a client to easily access data for partial subsegments by downloading ranges of data in the subsegment. When the Subsegment Index box is present, each byte in the subsegment is assigned to a level. If the range is not associated with any information in the level assignment, then any level that is not included in the level assignment may be used. There is 0 or 1 Subsegment Index boxes present per each Segment Index box that indexes only leaf subsegments, i.e. that only indexes subsegments but no segment indexes. A Subsegment Index box, if any, is the next box after the associated Segment Index box. A Subsegment Index box documents the subsegment that is indicated in the immediately preceding Segment Index box. Each level may be assigned to exactly one partial subsegment, i.e. byte ranges for one level are contiguous. Levels of partial subsegments are assigned by increasing numbers within a subsegment, i.e., samples of a partial subsegment may depend on any samples of preceding partial subsegments in the same subsegment, but not the other way around. For example, each partial subsegment contains samples having an identical temporal sub-layer and partial subsegments appear in increasing temporal sub-layer order within the subsegment. When a partial subsegment is accessed in this way, the final Media Data box may be incomplete, that is, less data is accessed than the length indication of the Media Data Box indicates is present. The length of the Media Data box may need adjusting, or padding may be used. The padding_flag in the Level Assignment Box indicates whether this missing data can be replaced by zeros. If not, the sample data for samples assigned to levels that are not accessed is not present, and care should be taken.

MPEG-DASH defines segment-container formats for both ISOBMFF and MPEG-2 Transport Streams. Other specifications may specify segment formats based on other container formats. For example, a segment format based on Matroska container file format has been proposed and may be summarized as follows. When Matroska files are carried as DASH segments or alike, the association of DASH units and Matroska units may be specified as follows. A subsegment (of DASH) may be are defined as one or more consecutive Clusters of Matroska-encapsulated content. An Initialization Segment of DASH may be required to comprise the EBML header, Segment header (of Matroska), Segment Information (of Matroska) and Tracks, and may optionally comprise other level1 elements and padding. A Segment Index of DASH may comprise a Cues Element of Matroska.

DASH supports rate adaptation by dynamically requesting Media Segments from different Representations within an Adaptation Set to match varying network bandwidth. When a DASH client switches up/down Representation, coding dependencies within Representation have to be taken into account. A Representation switch may happen at a random access point (RAP), which is typically used in video coding techniques such as H.264/AVC. In DASH, a more general concept named Stream Access Point (SAP) is introduced to provide a codec-independent solution for accessing a Representation and switching between Representations. In DASH, a SAP is specified as a position in a Representation that enables playback of a media stream to be started using only the information contained in Representation data starting from that position onwards (preceded by initializing data in the Initialization Segment, if any). Hence, Representation switching can be performed in SAP.

Several types of SAP have been specified, including the following. SAP Type 1 corresponds to what is known in some coding schemes as a "Closed GOP random access point" (in which all pictures, in decoding order, can be correctly decoded, resulting in a continuous time sequence of correctly decoded pictures with no gaps) and in addition the first picture in decoding order is also the first picture in presentation order. SAP Type 2 corresponds to what is known in some coding schemes as a "Closed GOP random access point" (in which all pictures, in decoding order, can be correctly decoded, resulting in a continuous time sequence of correctly decoded pictures with no gaps), for which the first picture in decoding order may not be the first picture in presentation order. SAP Type 3 corresponds to what is known in some coding schemes as an "Open GOP random access point", in which there may be some pictures in decoding order that cannot be correctly decoded and have presentation times less than intra-coded picture associated with the SAP.

In some video coding standards, such as MPEG-2, each intra picture has been a random access point in a coded sequence. The capability of flexible use of multiple reference pictures for inter prediction in some video coding standards, such as H.264/AVC and H.265/HEVC, has a consequence that an intra picture may not be sufficient for random access. Therefore, pictures may be marked with respect to their random access point functionality rather than inferring such functionality from the coding type; for example an IDR picture as specified in the H.264/AVC standard can be used as a random access point. A closed group of pictures (GOP) is such a group of pictures in which all pictures can be correctly decoded. For example, in H.264/AVC, a closed GOP may start from an IDR access unit (or from an intra coded picture with a memory management control operation marking all prior reference pictures as unused).

An open group of pictures (GOP) is such a group of pictures in which pictures preceding the initial intra picture in output order may not be correctly decodable but pictures following the initial intra picture are correctly decodable. Such an initial intra picture may be indicated in the bitstream and/or concluded from the indications from the bitstream, e.g. by using the CRA NAL unit type in HEVC or the recovery point SEI message in H.264/AVC. The pictures preceding the initial intra picture starting an open GOP may be referred to as leading pictures. There are two types of leading pictures: decodable and non-decodable. Decodable leading pictures are such that can be correctly decoded when the decoding is started from the initial intra picture starting the open GOP. In other words, decodable leading pictures use only the initial intra picture or subsequent pictures in decoding order as reference in inter prediction. Non-decodable leading pictures are such that cannot be correctly decoded when the decoding is started from the initial intra picture starting the open GOP.

As described above, the client or player may request Segments or Subsegments to be transmitted from different representations similarly to how the transmitted layers and/or sub-layers of a scalable video bitstream may be determined. Terms representation down-switching or bitstream down-switching may refer to requesting or transmitting a lower bitrate representation than what was requested or transmitted (respectively) previously. Terms representation up-switching or bitstream up-switching may refer to requesting or transmitting a higher bitrate representation than what was requested or transmitted (respectively) previously. Terms representation switching or bitstream switching may refer collectively to representation or bitstream up- and down-switching and may also or alternatively cover switching of representations or bitstreams of different viewpoints.

To enable multiple viewpoint (corresponding to multiple observation points) signaling, virtual reality content comprises or is associated with observation point/viewpoint relationship and grouping information. The viewpoint spatial relationship and grouping information can be signaled as part of the file format (e.g., based on ISOBMFF) as well as (or alternatively) signaled with the media data delivered to the client (e.g., as part of the DASH MPD).

For static viewpoints, the information can be stored in the file format and delivered for streaming as part of the initialization segment for the corresponding tracks (e.g., streaming using DASH). A **ViewpointBox('vpbx')** to be contained inside the **visualsampleentry** of the video track is defined. This is to be signaled in the initialization segment of an MPEG DASH adaptation set. In case of content represented by sub-picture tracks or tiled tracks, this information may be part of the extractor tracks. The code below illustrates an example implementation of the Viewpoint Box and is provided by way of illustration but not of limitation: 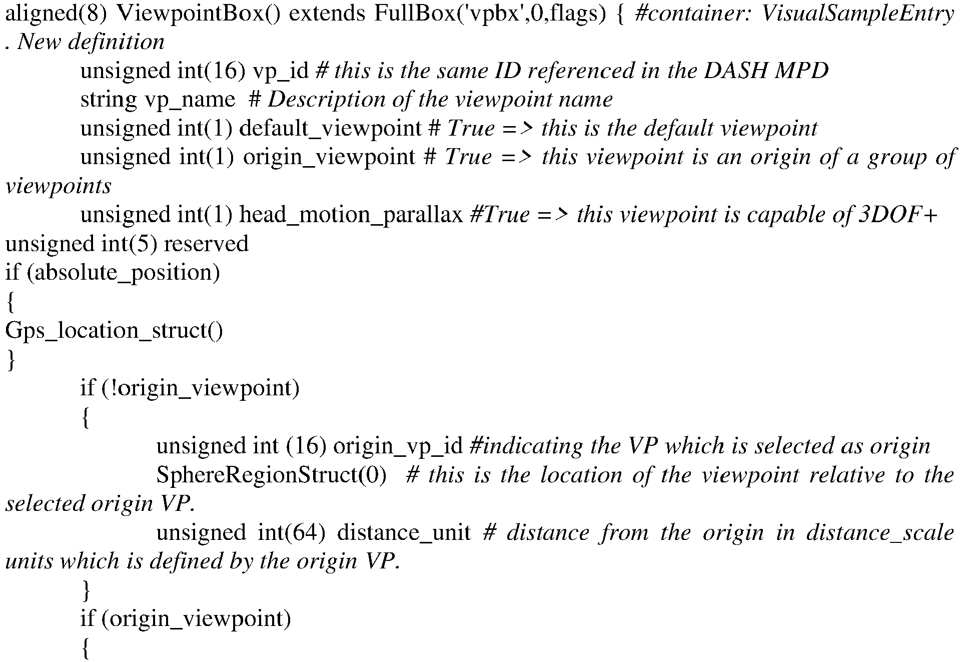 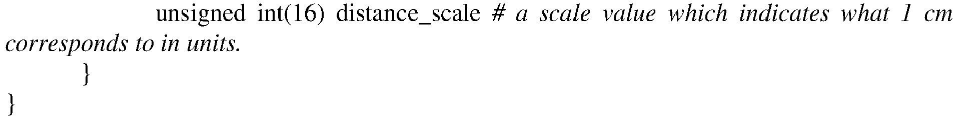 where the SphereRegionStruct is defined in OMAFv1 specification as follows:

```
aligned(8) SphereRegionStruct(range_included_flag) {
      signed int(32) centre_azimuth;
      signed int(32) centre_elevation;
      singed int(32) centre_tilt;
      if (range_included_flag) {
            unsigned int(32) azimuth_range;
            unsigned int(32) elevation range; }
      unsigned int(1) interpolate;
      bit(7) reserved = 0;
```

Another option is to have a ViewpointStruct which is used to define a ViewpointBox.

```
aligned(8) class ViewpointStruct() {
      unsigned int(16) vp_id;
      string vp_name;
      unsigned int(1) default_viewpoint;
      unsigned int(1) origin_viewpoint;
      unsigned int(1) head_motion_parallax;
   #True => this viewpoint is capable of 3DOF+
      unsigned int(5) reserved;
      if (!origin_viewpoint)
      {
            unsigned int (16) origin_vp_id;
            SphereRegionStruct(0);
            unsigned int(64) distance;
      }
      if (origin_viewpoint)
      {
            unsigned int(16) distance_scale;
      }
   }
```

where the SphereRegionStruct can be as follows:

```
   aligned(8) SphereRegionStruct(range_included_flag) {
      signed int(32) centre_azimuth;
      signed int(32) centre_elevation;
      singed int(32) centre_tilt;
      if (range_included_flag) {
            unsigned int(32) azimuth_range;
            unsigned int(32) elevation_range;
      }
      unsigned int(1) interpolate;
      bit(7) reserved = 0;
   class ViewpointBox(type) extends FullBox('vpbx',0,flags) {
   ViewpointStruct();
   }
```

The values centre_elevation, centre_azimuth and centre_tilt are sufficient to describe the relative position with respect to the origin viewpoint.

The Gps_location_struct is defined as

```
 Gps_location_struct {
 float(32) latitude;
 float(32) longitude;
 }
```

With the above described approach, each track is mapped to a viewpoint. All tracks of the same DASH AdaptationSet shall have the same viewpoint value, which is also then reflected to the MPD for DASH delivery. In case multiple viewpoints are marked as default, the player behavior is undefined and can randomly select one viewpoint as default. In case the viewpoint position or groups are changing, there can be a new *SampleEntry,* although it is better to have a different approach if the viewpoints' positions are changing frequently.

A DASH client may be made aware about the information which is in the file format at the onset of the DASH streaming session. The existing DASH Viewpoint descriptor in DASH at AdaptationSet level can be used. For example:

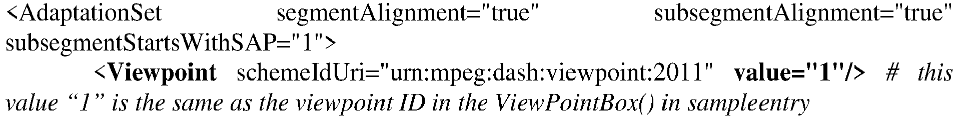

In case of a viewpoint represented by sub-pictures, the adaptation sets that belong to sub-pictures of the same video frame may have the same viewpoint ID in their sampleentry and DASH MPD.

For defining the relationship between viewpoints belonging to a viewpoint group, for each adaptation set, a new supplementary property viewpoint relationship descriptor may be defined as follows:

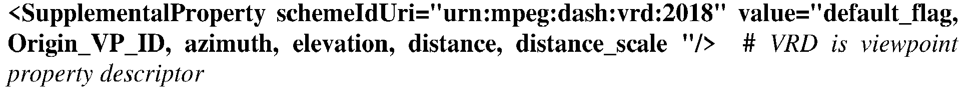

This descriptor could also be defined as an OMAF XML extension such as OMAF:vrd

If origin VP_ID == VP_ID in the Adaptation set, then azimuth, elevation and distance values may be 0. However, distance_scale is not zero because distance_scale defines the value of 1 cm in units as used in the 'distance' parameter. If origin_DP_ID != VP_ID in the adaptation set, then there shall be one VP_ID matching the origin_VP_ID in the MPD. In such a case, the distance_scale value of the VRD property of the viewpoint VP_ID is set to 0 and the distance_scale value of the origin_VP_ID viewpoint is to be used.

As another implementation embodiment, the viewpoint relationship description can be provided as an additional SupplementaryProperty as shown below:

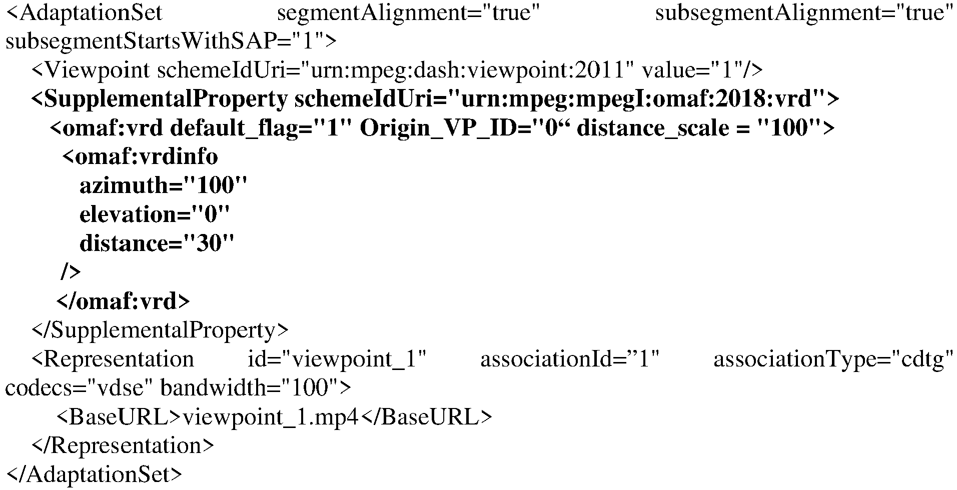

This implementation workflow assumes that the VP_IDs and VP structure is known during the creation of MP4 files and MP4 segments. This is a logical workflow where the viewpoint group definition is available (based on creative intent of the content creator) prior to creation of the final consumption experience for the end user. This approach creates a tight coupling between the MPD and the MP4 files, but that is already the case for other MP4 boxes that are reflected to the MPD (e.g., for region-wise packing, content coverage, etc.).

For dynamic viewpoints, a timed metadata track may be utilized to represent viewpoint information. For example, the 'cdsc' track reference may be used to link the viewpoint description metadata track to all relevant tracks in the initialization segment (including for extractor track(s)).

In an example embodiment, the timed metadata track is implemented by defining a new type of sample entry VPSampleEntry that extends the metadata sample entry as follows:

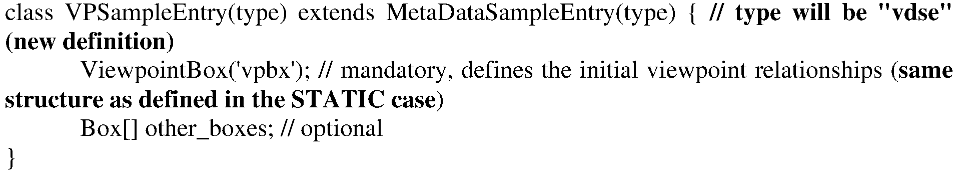

Each viewpoint sample will be of the following form:

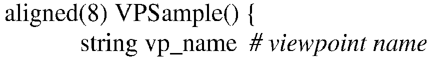

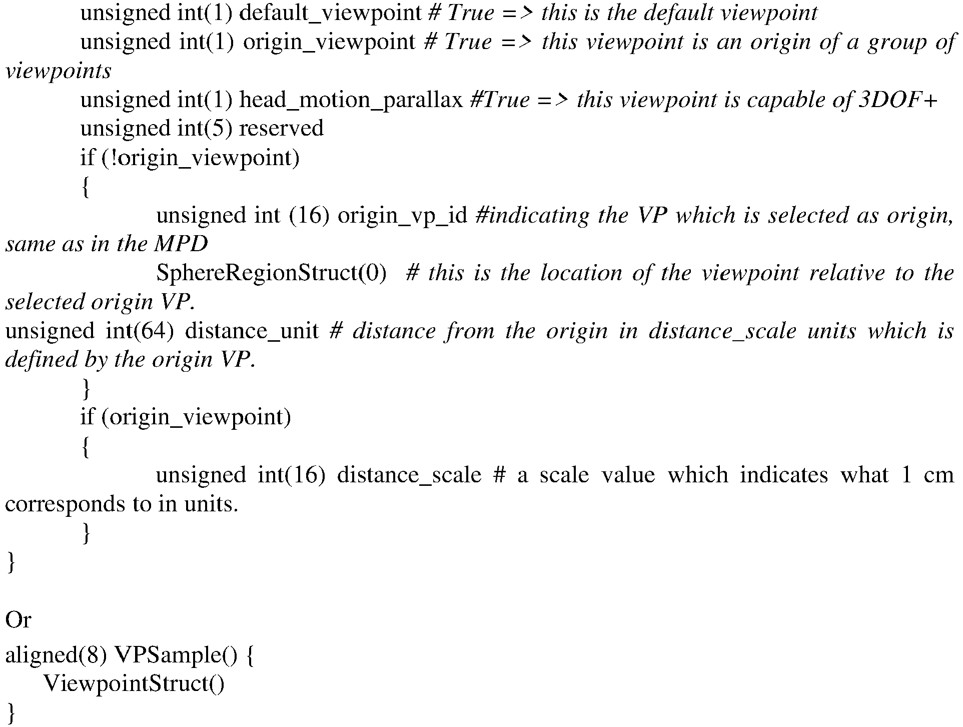

The VPI_ID of a viewpoint does not change during the course of time. However, the origin VP, the distance and orientation of a viewpoint from its origin VP and the distance scale can change in time. There may be multiple VP timed metadata tracks. As such, the OMAF Player should request and stream the proper VP timed metadata track which belongs to the selected (or default) viewpoint. The OMAF Player may make use of the metadata in the MPD to identify the spatial and logical relationships between the VPs. Alternatively, OMAF Player can request the initialization MP4 segments of different adaptation sets and build the necessary data structure for the VPs.

An example of the signalling of viewpoint timed metadata tracks in DASH MPD is presented below for two viewpoint timed metadata tracks defined in the MPD:

```
 <AdaptationSet segmentAlignment="true" subsegmentAlignment="true"
 subsegmentStartsWithSAP=" 1" >
       <Viewpoint schemeIdUri="urn:mpeg:dash:viewpoint:2011" value="1"/> # this is the
       same as viewpoint ID in the sample entry
      <Representation id="viewpoint_1" associationId="<could be multiple Adaptation sets,
      multiple Representation sets, could be a track grouping ID>" associationType="cdtg"
      codecs="vpse" bandwidth="100"> # vpse as defined in the file format
            <BaseURL>viewpoint_1.mp4</B aseURL>
      </Representation>
      </AdaptationSet>
      <AdaptationSet segmentAlignment="true" subsegmentAlignment="true"
      subsegmentStartsWithSAP=" 1" >
       <Viewpoint schemeIdUri="um:mpeg:dash:viewpoint:2011" value="2"/> # this is the
       same as viewpoint ID in the sample entry
      <Representation id="viewpoint_2" associationId="360-video-2"
      associationType="cdsc" codecs="vpse" bandwidth="100">
      <BaseURL>viewpoint_2.mp4</BaseURL>
      </Representation>
  </AdaptationSet>
```

The initial viewpoints definitions may be carried in the media adaptation sets, since a timed metadata track for a viewpoint may not always be present. One example way of implementing the definition is provided as follows:

```
 <SupplementalProperty schemeIdUri="um:mpeg:dash:vrd:2018" value="default_flag,
 Origin_VP_ID, azimuth, elevation, distance, distance_scale "/> #VRD is viewpoint property
 descriptor
```

For dynamic viewpoints, "sample groups" could also be utilized to carry such data which can be considered to be infrequently changing. The addition and removal of viewpoints can be supported with the restriction that the previous origin do not change for a given group.

In some embodiments of the implementation, the logically grouped viewpoints can also leverage geographical position information in order to indicate to the user about logically related groups in spatially accurate relative positions.

Streaming systems similar to MPEG-DASH include for example HTTP Live Streaming (a.k.a. HLS), specified in the IETF Internet Draft draft-pantos-http-live-streaming-19 (and other versions of the same Internet Draft). As a manifest format corresponding to the MPD, HLS uses an extended M3U format. M3U is a file format for multimedia playlists, originally developed for audio files. An M3U Playlist is a text file that consists of individual lines, and each line is a URI, blank, or starts with the character '#' indicating a tag or a comment. A URI line identifies a media segment or a Playlist file. Tags begin with #EXT. The HLS specification specifies a number of tags, which may be regarded as key-value pairs. The value part of tags may comprise an attribute list, which is a comma-separated list of attribute-value pairs, where an attribute-value pair may be considered to have the syntax AttributeName=AttributeValue. Hence, tags of HLS M3U8 files may be considered similar to Elements in MPD or XML, and attributes of HLS M3U8 files may be considered similar to Attributes in MPD or XML. In some versions of HLS, media segments are formatted according to the MPEG-2 Transport Stream and contain a single MPEG-2 Program. Each media segment is recommended to start with a Program Association Table (PAT) and a Program Map Table (PMT). In some versions of HLS, media segments are self-containing ISOBMFF movie fragments, similarly to DASH (Sub)Segments.

An end-to-end DASH system may be constructed as follows. The media content is provided by an origin server, which is typically a conventional web (HTTP) server. The origin server may be connected with a Content Delivery Network (CDN) over which the streamed content is delivered to and stored in edge servers. The MPD allows signaling of multiple base URLs for the content, which can be used to announce the availability of the content in different edge servers. Alternatively, the content server may be directly connected to the Internet. Web proxies may reside on the path of routing the HTTP traffic between the DASH clients and the origin or edge server from which the content is requested. Web proxies may cache HTTP messages and hence can serve clients' requests with the cached content. They are commonly used by network service providers, since they reduce the required network bandwidth from the proxy towards origin or edge servers. For end-users HTTP caching provides shorter latency. DASH clients may be connected to the Internet through an access network, such as a mobile cellular network.

ISO/IEC 23009-5 specifies server and network assisted DASH (SAND), which introduces messages between DASH clients and network elements or between various network elements for the purpose to improve efficiency of streaming sessions by providing information about real-time operational characteristics of networks, servers, proxies, caches, CDNs as well as a DASH client's performance and status. For example, the AnticipatedRequests SAND message allows a DASH client to announce to a DASH-ware network element (DANE) which specific set of segments it is interested in. The intent is to signal the set of segments in representations that the DASH client is likely to select and request soon. The message payload includes a list of anticipated requests, each including a URL of the requests, optionally a byte range for the request (when only a part of the content referred to by the URL is expected to be requested), and optionally a time at which the DASH client expects to issue the request for the resource identified by the URL.

Virtual reality video content may use different projection formats. The term "360° video" may be used interchangeably with the term "virtual reality video". A specific projection from a spherical image covering 360-degree field-of-view horizontally and 180-degree field-of-view vertically to a rectangular two-dimensional image plane is known as equirectangular projection. In this case, the horizontal coordinate may be considered equivalent to a longitude, and the vertical coordinate may be considered equivalent to latitude, with no transformation or scaling applied. In some cases, panoramic content with 360-degree horizontal field-of-view but with less than 180-degree vertical field-of-view may be considered special cases of equirectangular projection, where the polar areas of the sphere have not been mapped onto the two-dimensional image plane. The equirectangular projection preserves the straightness of the vertical lines but distorts the nadir and zenith areas.

In cubemap projection format (a.k.a. cube map), spherical video is projected onto the six faces (a.k.a. sides) of a cube. The cubemap may be generated, for example, by first rendering the spherical scene six times from a viewpoint, with the views defined by a 90 degree view frustum representing each cube face. The cube sides may be frame-packed into the same frame or each cube side may be treated individually (in encoding, for example). There are many possible orders of locating cube sides onto a frame and/or cube sides may be rotated or mirrored. The frame width and height for frame-packing may be selected to fit the cube sides "tightly" e.g. at 3x2 cube side grid, or may include unused constituent frames e.g. at 4x3 cube side grid.

The ability to signal an initial observation orientation or an initial viewport for VR content is a desirable feature, such that a content author's preference is obeyed when starting a VR playback session. An initial observation orientation or initial viewport may not only be assigned to the beginning of a VR presentation but also to any random access point or even to any point in the VR presentation. However, a need exists for the ability to indicate the "strength" of the initial observation orientation or the initial viewport signaling. For example, when a viewer has watched a part of the content earlier and seeks to view another part of the content, the need exists to permit the content creator/author to be able to control (1) whether the content playback after seeking continues using the user's head orientation (or more generally, the user's previous orientation to view the content), or (2) whether the signaled initial viewing orientation or viewport should be applied.

The former may be used advantageously, for example, when the content is generated with a stationary VR camera or camera rig without actual scene cuts or when there were no scene cuts between the previous viewing position and the seek position. The latter may be used advantageously, for example, when the position of the camera changed or there was a scene cut between the previous viewing position and the seek position, or when no content of the same video was viewed before. Furthermore, some points in the presentation (such as scene cuts, for example) may be such that the content author wishes to select the observation orientation no matter what the earlier orientation of the head-mounted display was.

Moreover, in DASH, the initial observation setup signaling should be available for a DASH client so that the client can request a (Sub)Segment from a correct Adaptation Set and Representation. When each Representation in an Adaptation Set covers the same viewport with constituent viewports of different quality, the signaling should enable a DASH client to select the Representation that has a good-quality constituent viewport exactly or approximately matching the initial observation orientation or the initial viewport. When each Representation in an Adaptation Set covers the same relatively narrow viewport, typically without constituent viewports, and there are several Adaptation Sets, each covering a different viewport of the same omnidirectional content, the signaling should enable a DASH client to select the Adaptation Set that exactly or approximately matches the initial observation orientation or the initial viewport and subsequently a good-quality Representation from that Adaptation Set.

The sample entry and/or sample of an initial viewing orientation track may be appended to contain a box indicative of but not limited to one or more of the following:
- whether the track applies in the case when the selection of the viewpoint is not controlled, e.g. when a user accesses the content without selecting the viewpoint by any means, this could be achieved by having a flag identifying whether a default viewpoint or observation point is designated.
- whether the track applies when a certain spatial group has been selected
- whether the track applies when a certain logical group has been selected
- whether the track apples when any of indicated spatial or logical groups or any particular viewpoint was played, e.g., the track indicates the initial viewing orientation when switching from an indicated previous group or viewpoint.

A viewpoint group is derived from the viewpoint box information or timed metadata information from all the tracks. In case of DASH delivery, MPD may be used to identify the logical group constellation.

The sample entry and/or sample may be appended under a new sample entry type (e.g.., not under that used in OMAF, e.g., 'invo') or under the sample entry type used in OMAF ('invo'). In the latter case, an indication that OMAF v1 player would not use the track without caution could be given, such as linking, with a track reference, the initial viewing orientation track to a track group of a particular type (e.g. indicating a multi-viewpoint presentation).

For example, an InvoConditionBox to be included in the sample entry may be specified as follows:

```
 class InvoControlBox extends FullBox('ivoc', 0, 0) {
      unsigned int(16) num_source_vps;
      for(i = 0; i < num_source_vps; i++)
            unsigned int(16) source_vp_id[i];
      unsigned int(16) num_dest_vps;
      for(i = 0; i < num_dest_vps; i++)
            unsigned int(16) dest_vp_id[i]; }
```

num_source_vps equal to 0 specifies that the initial viewing orientations specified in this track apply regardless of which, if any, viewpoint was previously played.

source_vp_id[i] for all values of i specify the list of the viewpoint identifiers of the viewpoints that suffice as previously played "source" viewpoints such that this track specifies the initial viewing orientations when switching from any of those source viewpoints.

num_dest_vps specifies the number of viewpoints for which this track provides the initial viewing orientations. When num_dest_vps is equal to 1, the track applies to the viewpoint with identifier dest_vp_id[0]. When num_dest_vps is greater than 1, this track provides the initial viewing orientation and viewpoint that is among dest_vp_id[i] for i in the range of 0 to num_dest_vps minus 1, inclusive.

The sample structure may be defined as follows:

```
 class InitialViewingOrientationSample() extends SphereRegionSample() {
      unsigned int(1) refresh_flag;
      bit(7) reserved = 0;
      if (num_dest_vps > 1)
            unsigned int(16) sample_dest_vp_id; }
```

sample_dest_vp_id specifies the viewpoint identifier that applies to this sample. When a user has selected a group of viewpoints defined by the list dest_vp_id[i] for i in the range of 0 to num_dest_vps minus 1, inclusive, sample_dest_vp_id specifies the viewpoint that should be used as the initial viewpoint rendered for the user.

The multi-viewpoint recommended viewport timed metadata track indicates the viewport that should be displayed when the user does not have control of the viewing orientation or has released control of the viewing orientation. The multi-viewpoint recommended viewport timed metadata track may for example be used for indicating a recommended viewport based on a director's cut or based on measurements of viewing statistics.

The track sample entry type may for example be required to be equal to 'mrvp'.

The sample entry of this sample entry type may for example be specified as follows:

```
 class MrvpSampleEntry() extends SphereRegionSampleEntry('mrvp') {
      RcvpInfoBox(); // mandatory
      MrvpInfoBox(); // mandatory }
```

The syntax and semantics of RcvpInfoBox may be specified identically to how it is specified in OMAF.

MrvpInfoBox may provide information indicative of but not limited to:
- whether this timed metadata track describes a recommended viewport sequence of multiple viewpoints
- whether this timed metadata track describes a recommended viewport sequence with head-motion parallax

The syntax of MrvpInfoBox may be specified for example as follows:

```
 class MrvpInfoBox extends FullBox('mrif, 0, 0) {
      unsigned int(1) multiple_viewpoints_flag;
      unsigned int(1) head_motion_parallax_flag;
      unsigned int(6) reserved = 0; }
```

When multiple viewpoints are enabled (e.g., when the multiple_viewpoints_flag in the referred sample entry is equal to 1), the sample syntax is indicative of the viewpoint referred to by the sample. When head motion parallax is enabled (e.g., when the head_motion_parallax_flag in the referred sample entry is equal to 1), the sample syntax is indicative of the viewing position.

The sample syntax may be specified as follows:

```
 class MrvpSample() extends SphereRegionSample() {
      if (multiple_viewpoints_flag)
            unsigned int(16) vp_id;
      if (head motion_parallax flag) {
            signed int (16) translate_x;
            signed int (16) translate_y;
            signed int (16) translate_z; }
            }
```

vp_id specifies the viewpoint identifier of the viewpoint from which the recommended viewport of this sample is derived.

For some viewpoints with the head_motion_parallax_flag, some representation sets may not be head motion parallax capable and, in such situations the EOF definition for representation sets may be considered.

translate_x, translate_y and translate_z specify translation values in X,Y and Z directions, respectively, from the center of the viewpoint.

A track group that contains all the tracks of viewpoints that are logically and/or spatially associated may be formed. A 'cdtg' track reference from the multi-viewpoint recommended viewport track to the track group may be indicated (using the identifier of the track group).

The implementation section using the MPEG DASH and ISOBMFF is given to illustrate an example and it is not restrictive of the patent application applicability. Other embodiments could be implemented using any other protocol at any layer of the ISO OSI stack. For instance, the same signaling could be carried over RTSP, SIP, SDP, RTP, HTTP (without DASH) protocols and alike.

In another embodiment of this invention, the signaling and/or storage is via an edge server or cache server, which is located between the origin server and the client(s).

In another embodiment of the invention, a different architecture could be envisaged, in addition to the typical DASH-based client-server architecture for delivery. For example, point-to-point conversational, or point-to-multipoint (multicast or broadcast), peer-to-peer, to name a few possible delivery architectures.

The implementation section using the MPEG DASH and ISOBMFF is given to illustrate an example and it is not restrictive of the patent application applicability. Other embodiments could be implemented using any other protocol at any layer of the ISO OSI (Open Systems Interconnection) stack. For instance, the same signaling could be carried over RTSP, SIP (Session Initiation Protocol), SDP (Session Description Protocol), RTP, HTTP (without DASH) protocols and the like.

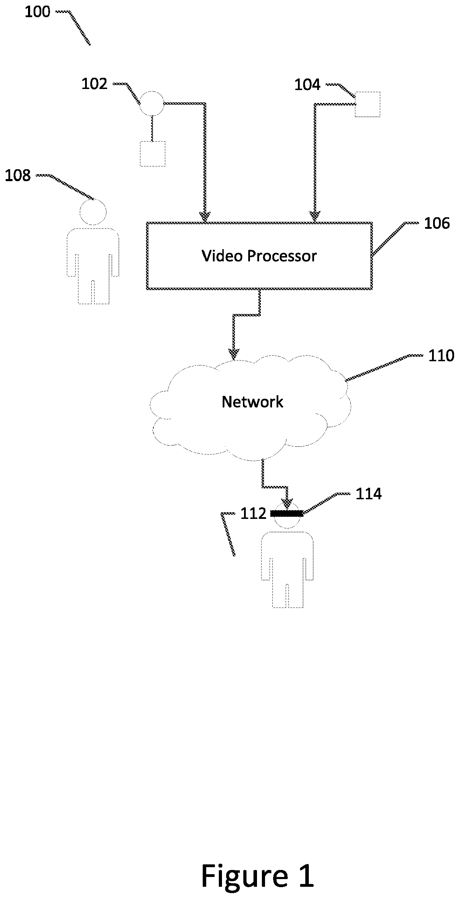

Figure 1 depicts an example system environment 100 in which implementations in accordance with an example embodiment of the present invention may be performed. The depiction of environment 100 is not intended to limit or otherwise confine the embodiments described and contemplated herein to any particular configuration of elements or systems, nor is it intended to exclude any alternative configurations or systems for the set of configurations and systems that can be used in connection with embodiments of the present invention. Rather, Figure 1, and the environment 100 disclosed therein is merely presented to provide an example basis and context for the facilitation of some of the features, aspects, and uses of the methods, apparatuses, and computer program products disclosed and contemplated herein. It will be understood that while many of the aspects and components presented in Figure 1 are shown as discrete, separate elements, other configurations may be used in connection with the methods, apparatuses, and computer programs described herein, including configurations that combine, omit, and/or add aspects and/or components.

As shown in Figure 1, system environment 100 includes at least one camera 102. Many implementations of system environment 100 contemplate the use of one or more cameras that are suitable for capturing 360° video images for use in the production of virtual reality content, such as Nokia's OZO system, and/or other cameras or camera arrays that can be used to create 360° video images and/or other panoramic views. Figure 1 also contemplates the existence of one or more media sources 104, which may be a database, other device and/or other system which allows for the transmission and/or access of audiovisual content that has been previously captured or otherwise generated.

As shown in Figure 1, camera 102 and media source 104 are capable of and/or configured to transmit images and/or other audiovisual content, such as 360° video images, as a data stream. Such transmission can be accomplished in accordance with any approach and/or protocol that is suitable for transmitting image data from a camera to one or more devices. In some implementations, transmissions of image data are sent wirelessly or over a wired connection, in real time or near real time, to one or more devices configured to receive and/or process video images.

As shown in Figure 1, camera 102 and media source 104 may transmit their respective video image streams to a video processor 106. Video processor 106 is representative of any of a class of devices that may be implemented as stand-alone devices and/or devices that may be integrated into other devices or components. As shown in Figure 1, video processor 106 is configured to receive the image data streams and any related information from each of camera 102 and media source 104. In some example implementations, video processor 106 is also configured to permit the selection and/or identification of one or more saliency points in a video stream. In some example embodiments, video processor 106 embeds information indicative of that saliency point into the video stream or a separate stream (or a signaling structure, such as Media Presentation Description) associated with the video stream. In some example embodiments, video processor 106 regards that saliency point as an indication associated with an intended behavior of a playback device, determines the intended behavior of the playback device, and in response to determining the intended behavior of the playback device, causes a control signal to be generated, wherein the control signal is associated with a rendering operation of the audiovisual presentation on the playback device. Said control signal may for example be included in a video stream or be included in description of a video stream.

Director 108 is shown as an optional operator of video processor 106, and, in some implementations, is capable of monitoring and/or controlling one or more image data streams during the production and/or streaming of the image data streams. In some example embodiments director 108 causes information indicative of a saliency point to be embedded into a particular location in a video stream. In some example embodiments director 108 determines the intended behavior of the playback device and causes a control signal to be generated, wherein the control signal is associated with a rendering operation of the audiovisual presentation on the playback device. Said control signal may for example be included in a video stream or be included in description of a video stream. Director 108 may additionally or alternatively make creative decisions regarding the content presented in a video stream, and the relative arrangement of subjects, background elements, and other objects within the work. As noted above, the director 108 is optional in environment 60, and implementations are possible where one or more saliency points are embedded in a video stream by video processor 106, the action of some other device, or otherwise without the presence of or action by a director or other entity.

As depicted in Figure 1, video processor 106 sends audiovisual content over a network 110. It will be understood that the actual sending apparatus may be a different entity from a video processor entity but that these entities are operationally connected and hence depicted as a single video processor 106. The sending apparatus may for example be an HTTP server (such as a web server, for example) in some embodiments. Network 110 may be any network suitable for the transmission of 360° video and related orientation information, directly and/or indirectly, from one or more devices, such as video processor 106, to a viewing device, such as virtual reality headset 114. While a viewing device is depicted as a single apparatus in Figure 1, it will be understood that a viewing device may generally comprise several devices that are operationally connected. For example, a virtual reality headset may be connected to a computer that receives the audiovisual content over the network 110. In another example, a virtual reality headset uses as its display device a smartphone that is attached to the headset and receives the audiovisual content over the network 110. In some implementations, the network 110 includes and/or incorporates the public Internet.

Figure 1 also depicts a user 112, who is associated with a viewing device, such as virtual reality headset 114. In general, virtual reality headset 114 is capable of receiving one or more data streams, such a one or more 360° image data streams (along with the corresponding orientation information), and rendering visible images that can be displayed to the user 112. In some implementations, virtual reality headset 114 is also capable of ascertaining positional information about the user 112, such as the angle and/or degree to which the user 112 has turned his or her head, and other information about the movement of the user 112 or the user 112's head. While Figure 1 depicts user 112 as viewing content via a virtual reality headset 114, the user may view content via any viewing system that is configured to display all or part of the video transmitted to the user. For example the user may use one or more monitors, mobile device, and/or other handheld or desktop displays to view content. When the display is configured to display part of the 360° content at any single point of time, the user 112 may be given controls which part of the content is displayed. For example, the user 112 may be able to control the viewing direction e.g. using a keyboard, joystick, mouse or any other input peripheral or by rotating or turning the display device, such as a smartphone.

In an embodiment, statistics on users' viewing behavior of a VR video clip are collected. For example, a player may report the viewing directions or orientation (e.g., the orientation of the virtual reality headset 114 with respect to its initial orientation at the start of playing the clip) as a function of media time of the clip to a server collecting the statistics. By collecting the reported viewing directions, the most probable viewing direction (MPVD) may be formed as a function of media time of the clip. The MPVD may be understood to indicate the direction or the region that is statistically most likely rendered to users. The MPVD may be provided to the director 108 as input for assisting creative decisions. Alternatively, the MPVD may be used as such by the video processor 106 as a saliency point to be embedded into a particular location in a video stream. Alternatively, the video processor 106 regards the MPVD as an indication associated with an intended behavior of a playback device, determines the intended behavior of the playback device, and in response to determining the intended behavior of the playback device, causes a control signal to be generated, wherein the control signal is associated with a rendering operation of the audiovisual presentation on the playback device. This embodiment enables the viewing behavior of an initial set of users to assist in or determining the selection of saliency points and hence improving the viewing experience of subsequent users.

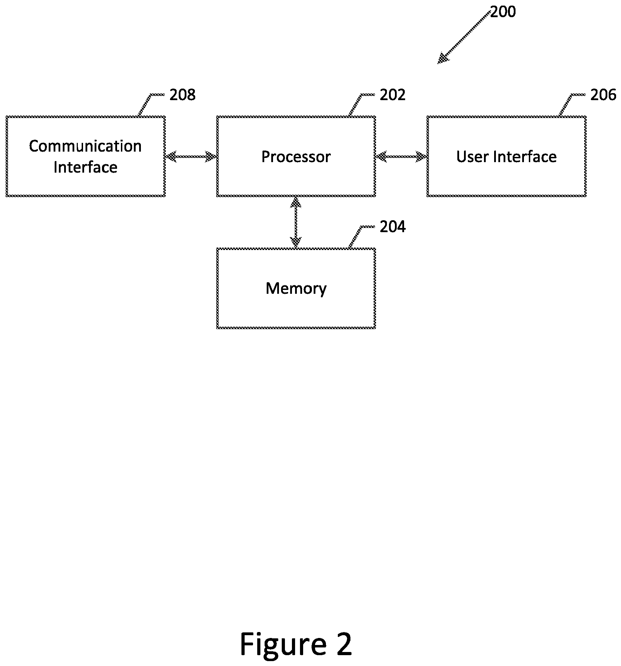

Based at least in part on an initial observation setup associated with a portion of audiovisual content and a set of conditions associated with that initial observation setup, the audiovisual content can be rendered in a manner that takes into account the position of a user and creative choices made by a content creator when rendering content to a viewer. In this regard, the observation point and orientation selection for audiovisual content can be controlled by an apparatus 200 as depicted in Figure 2. The apparatus may be embodied by any of the cameras 102, media sources 104, or any of the other devices discussed with respect to Figure 1, such as video processor 106, and/or devices that may be incorporated or otherwise associated with network 110. Alternatively, the apparatus 200 may be embodied by another computing device, external to such devices. For example, the apparatus may be embodied by a personal computer, a computer workstation, a server or the like, or by any of various mobile computing devices, such as a mobile terminal, e.g., a smartphone, a tablet computer, a video game player, etc. Alternatively, the apparatus may be embodied by a virtual reality system, such as a head mounted display such as virtual reality headset 114.

Regardless of the manner in which the apparatus 200 is embodied, the apparatus of an example embodiment is configured to include or otherwise be in communication with a processor 202 and a memory device 204 and optionally the user interface 206 and/or a communication interface 208. In some embodiments, the processor (and/or co-processors or any other processing circuitry assisting or otherwise associated with the processor) may be in communication with the memory device via a bus for passing information among components of the apparatus. The memory device may be non-transitory and may include, for example, one or more volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processor). The memory device may be configured to store information, data, content, applications, instructions, or the like for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

As described above, the apparatus 200 may be embodied by a computing device. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 202 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 202 may be configured to execute instructions stored in the memory device 204 or otherwise accessible to the processor. Alternatively or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (e.g., a pass-through display or a mobile terminal) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

In some embodiments, the apparatus 200 may optionally include a user interface 206 that may, in turn, be in communication with the processor 202 to provide output to the user and, in some embodiments, to receive an indication of a user input. As such, the user interface may include a display and, in some embodiments, may also include a keyboard, a mouse, a joystick, a touch screen, touch areas, soft keys, a microphone, a speaker, or other input/output mechanisms. Alternatively or additionally, the processor may comprise user interface circuitry configured to control at least some functions of one or more user interface elements such as a display and, in some embodiments, a speaker, ringer, microphone and/or the like. The processor and/or user interface circuitry comprising the processor may be configured to control one or more functions of one or more user interface elements through computer program instructions (e.g., software and/or firmware) stored on a memory accessible to the processor (e.g., memory device 204, and/or the like).

The apparatus 200 may optionally also include the communication interface 208. The communication interface may be any means such as a device or circuitry embodied in either hardware or a combination of hardware and software that is configured to receive and/or transmit data from/to a network and/or any other device or module in communication with the apparatus. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

Some example implementations contemplate a playback mode condition. A playback mode condition may be pre-defined e.g. in a standard or may be indicated e.g. by a video processor 106 in a video stream or a description of a video stream. A playback mode condition may indicate the playback modes for which the initial observation setup applies and/or the playback modes for which the initial observation setup does not apply. Playback modes may comprise but are not limited to continuous playback, seek or random access for initiating continuous playback, fast forward play in which e.g. only intra-coded pictures are played, fast backward play in which e.g. only intra-coded pictures are played. A playback mode condition may enable the content author to indicate that the observation setup is reset when seeking for initiating continuous playback but is not reset for fast forward or backward play, or vice versa.

Some example implementations also contemplate additional signaling options. In one such example implementation, the approach to providing timed audiovisual content intended for user-driven selective rendering may be characterized by: indicating an initial observation setup within a syntax structure; and indicating, in the syntax structure, if the initial observation setup applies unconditionally when random accessing In another example implementation, the approach to accessing audiovisual content intended for user-driven selective rendering may be characterized by: parsing an initial observation setup from a syntax structure; and parsing, from the syntax structure, if the initial observation setup applies unconditionally when random accessing. In another example implementation, the syntax structure may be included in or parsed from a presentation layer, such as SMIL or HTML5 or presentation information included therein (e.g. cascaded style sheets). In an embodiment, the syntax structure is an element in a markup language, such as HTML5. In another example implementation, the syntax structure may be included in or parsed from a presentation description or a streaming manifest, such as DASH MPD or SDP (Session Description Protocol).

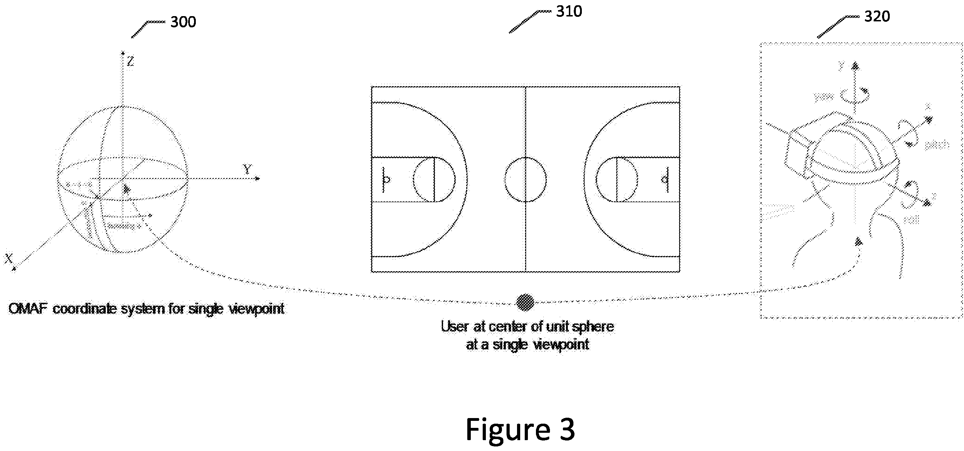

Figure 3 is a graphical representation of a single observation point corresponding to a single view position. As illustrated in 310, a user is located at the center of a unit sphere and has three degrees of freedom (Yaw-Pitch-Roll illustrated in 320). The observation point is defined by a coordinate system 300 associated with a viewpoint.

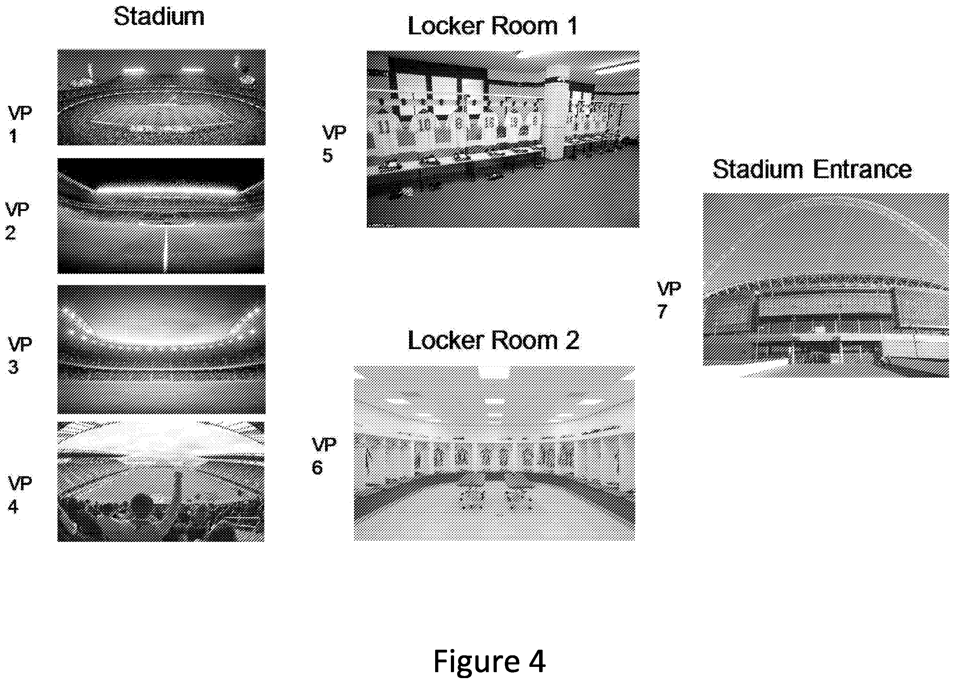

Figure 4 is a graphical representation of examples illustrating the concept of observation point/viewpoint groups. The spatially related observation point group "Stadium group" of this example embodiment comprises observation points VP1, VP2, VP3, and VP4, which are four different observation points located in a stadium. One of VP1, VP2, VP3, and VP4 is set as a default observation point, for example, VP3. When a user switches to content in the Stadium group during playback, the user will be first presented with audiovisual content associated with the default observation point, e.g., VP3. One of VP1, VP2, VP3, and VP4 may be set as an origin point. All of the other observation points are spatially defined relative to the origin point.

Another spatially related observation point group "locker room 1" may additionally or alternatively be provided, with the spatially related observation point group "locker room 1" only including one single observation VP5 in an example embodiment. VP5 may be the default observation point and the origin point of observation point group "locker room 1". Similarly, other spatially related observation point groups such as "locker room 2" (includes only VP6) and "stadium entrance" (includes only VP7) may be provided.

A logically related observation point group "locker rooms" may be provided. The "locker rooms" of this example embodiment includes two observation points, VP5 and VP6. One of VP5 and VP6 is defined as a default point. And one of VP5 and VP6 is defined as an origin point. In some embodiments, the origin point is the same as the default point. In some embodiments, the origin point is different from the default point.

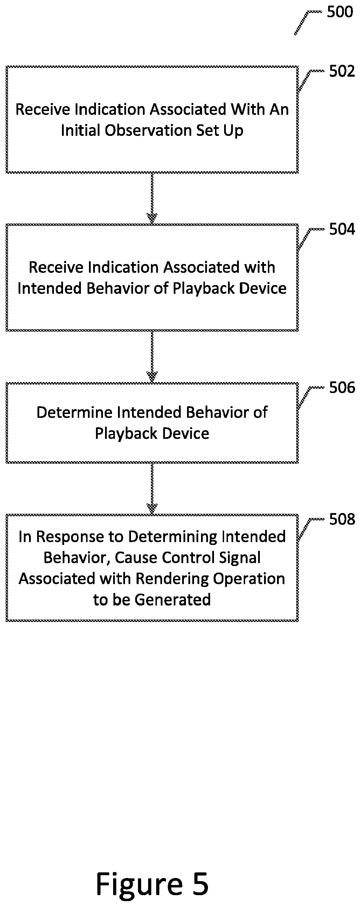

Referring now to Figure 5, the operations performed by the apparatus 200 of Figure 2 in accordance with an example embodiment of the present invention are depicted as an example process flow 500. In this regard, the apparatus includes means, such as the processor 202, the memory 204, the communication interface 208 or the like, for receiving an indication associated with an initial observation setup of a set of transmission units of an audiovisual presentation; receiving an indication associated with an intended behavior of a playback device; determining the intended behavior of the playback device; and in response to determining the intended behavior of the playback device, causing a control signal to be generated, wherein the control signal is associated with a rendering operation of the audiovisual presentation on the playback device. As such, the apparatus is generally capable of effecting the controlled observation and orientation selection for audiovisual content discussed and otherwise contemplated herein.

The apparatus includes means, such as the processor 202, the memory 204, the communication interface 208 or the like, for receiving an indication associated with an initial observation setup of a set of transmission units of an audiovisual presentation. With reference to Figure 5, process flow 500 commences at block 502 with receiving an indication associated with an initial observation setup. In some example implementations of process flow 500, the observation setup comprises multiple observation points. The multiple observation points of this example embodiment are categorized by one or more observation groups with each observation group comprising one default observation point and one origin point. Multiple observation orientations may be associated with the multiple observation points. In some embodiments, the one or more observation point groups comprises one or more spatially related observation point groups; and a set of observation points in each spatially related observation point group has a spatial relationship between the set of observation points. In some embodiments, the one or more observation point groups comprises one or more logically related observation point groups; and a set of observation points in each logically related observation point group has a pre-defined logical relationship between the set of observation points. In some embodiments, the multiple observation points comprises one or more static observation points; and each static observation point is associated with one or more tracks mapped to the static observation point. In some embodiments, the multiple observation points comprises one or more dynamic observation points; and each dynamic observation point is associated with one or more timed metadata tracks.

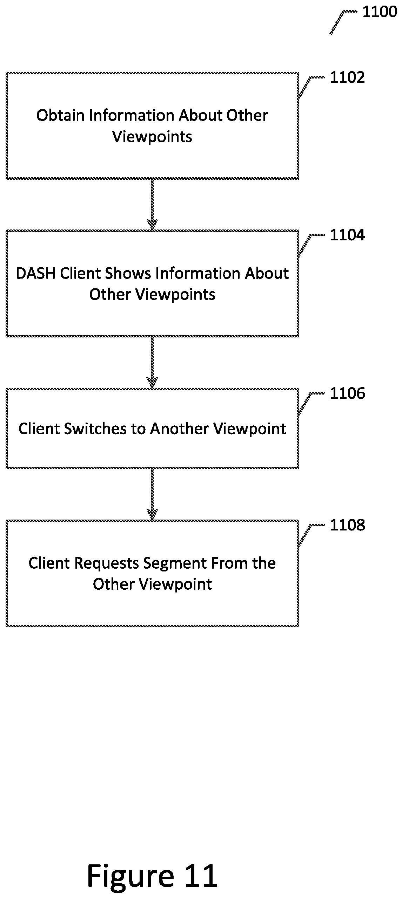

The apparatus also includes means, such as the processor 202, the memory 204, the communication interface 208 or the like, for receiving an indication associated with an intended behavior of a playback device. With reference to Figure 5, process flow 500 continues at block 504 with receiving an indication associated with the intended behavior of a playback device. In general, for many example implementations, the indication associated with intended behavior of a playback device allows for a determination of the "strength" of a content creator's preference that certain content be rendered in a particular manner, and contemplates conditions under which a viewer's positioning (such as the position of the user's head, or other orientation of a viewing device, for example) may override the content creator's preferences. In some example implementations of block 504, the intended behavior of the playback device includes, upon the satisfaction of a condition, setting the observation setup to the initial observation setup. In some example implementations of block 504, the indication associated with the intended behavior of the playback device comprises an indication associated with an intended behavior of the playback device under a continuous playback mode of the playback device and an indication associated with an intended behavior of the playback device under a random access mode of the playback device. As such, some example implementations of block 604 contemplate a degree of situational behavior of the playback device, in the sense that content may be rendered in one manner when in a continuous playing mode, while content may be rendered in another manner when a segment or subsegment of content is randomly accessed. In a playback session, observation point switching illustrated in Figure 11 is also available.

The apparatus includes means, such as the processor 202, the memory 204, the communication interface 208 or the like, for determining the intended behavior of the playback device. With reference to Figure 5, process flow 500 continues at block 506 with determining the intended behavior of the playback device. In some example implementations of block 506, determining the intended behavior of the playback device comprises determining whether a condition associated with the intended behavior of the playback device has been met. Some example implementations contemplate scenarios involving an indication that an initial observation setup (1) does not apply, (2) applies conditionally, or (3) applies unconditionally in continuous playback. Likewise, some such example implementations and other example implementations contemplate scenarios involving an indication that an initial observation setup (1) does not apply, (2) applies conditionally, or (3) applies unconditionally when random accessing of the segment or subsegment occurs.

In some example implementations, the condition comprises at least one reset condition associated with the initial observation setup. For example, a reset condition may be met that causes the initial observation setup to apply. In such example implementations, the reset condition may take the form of a reset range of observation points and/or observation orientations that cause the initial observation setup to apply. Moreover, in some implementations, the reset condition may be based at least in part on a present observation setup.

In some such example implementations, and in other example implementations, the condition comprises at least one sustaining condition associated with the initial observation setup, such as, for example, a sustaining condition that causes the initial observation setup to not apply. In such example implementations, the sustaining condition may include a sustaining range indicative of observation points and/or observation orientations that cause the initial observation setup to not apply.

The apparatus includes means, such as the processor 202, the memory 204, the communication interface 208 or the like, for in response to determining the intended behavior of the playback device, causing a control signal to be generated, wherein the control signal is associated with a rendering operation of the audiovisual presentation on the playback device. With reference to Figure 5, process flow 500 continues to block 508, which includes, in response to determining the intended behavior of the playback device, causing a control signal associated with a rendering operation to be generated. In some example implementations of block 508, the control signal is indicative of the intended behavior of the playback device. In some example implementations of block 508, the rendering operation of the audiovisual presentation on the playback device comprises selecting a portion of the audiovisual presentation. As discussed throughout herein, implementations of process 500 and other embodiments of the invention contemplate whether, and to what degree, the content presented to a viewer should be rendered such that the relative positioning of the content with respect to the viewer is realigned and/or shifted based on the initial observation setup associated with a segment or subsegment of content, the orientation of the viewing device, and/or the manner in which the segment or subsegment is encountered (continuous playback or random accessing, for example). In some example implementations of block 508, upon determining the intended behavior of the playback device (based, for example, on a determination of that a condition associated with the application of the initial observation setup has been met), a control signal may be generated that directly or indirectly causes content to be rendered in the intended manner and presented to the viewer.

It will be appreciated that some implementations of process 500, and other embodiments of the invention described herein, contemplate the repeated determining of the intended behavior of the playback device. For example, some example implementations contemplate a first observation setup identifier associated with a first set of transmission units of audiovisual content, and a second observation setup identifier for a second set of transmission units. In some such example implementations, a transmission unit may be defined by one or more Adaptation Set, Representation, Subrepresentation, set of segments, set of subsegments, and/or a time range. These different transmission units may be associated with different reset conditions and/or sustaining conditions, such that the intended behaviors for the separate transmission units differ. Moreover, the conditions associated with the separate transmission units may be correlated or otherwise linked, such that the conditions and/or intended behavior associated with one transmission unit are based at least in part on the conditions and/or intended behavior associated with the other transmission unit.

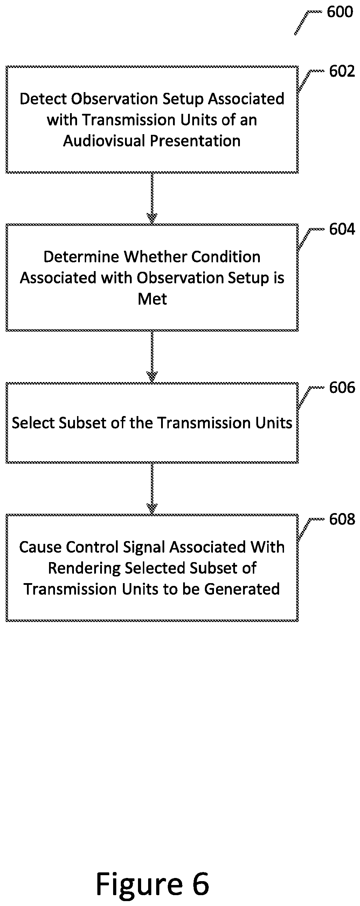

Referring now to Figure 6, another set of operations performed by the apparatus 200 of Figure 2 in accordance with an example embodiment of the present invention are depicted as an example process flow 600. It will be appreciated that some example implementations of process flow 600 may be particularly advantageous in embodiments that arise within and/or are performed by a viewing device, such as virtual reality headset 114 for example. In this regard, the apparatus includes means, such as the processor 202, the memory 204, the communication interface 208 or the like, for detecting an observation setup associated with a set of transmission units of an audiovisual presentation. With reference to Figure 6, process flow 600 commences at block 602 with detecting an observation setup associated with transmission units of an audiovisual presentation. Detecting the observation setup may be done in accordance with any of a number of approaches, depending on how the observation setup is received, which may in turn be dependent upon the protocols and formats associated with the audiovisual presentation and the transmission thereof. It will be appreciated that any of media formats and protocols discussed and/or contemplated herein may be used in implementations of process 600 and block 602.

In some example embodiments, the observation setup comprises multiple observation points; the multiple observation points are categorized by one or more observation groups; each observation group comprises one default observation point and one origin point, and multiple observation orientations associated with the multiple observation points. In some embodiments, the one or more observation point groups comprises one or more spatially related observation point groups; and a set of observation points in each spatially related observation point group has a spatial relationship between the set of observation points. In some embodiments, the one or more observation point groups comprises one or more logically related observation point groups; and a set of observation points in each logically related observation point group has a pre-defined logical relationship between the set of observation points. In some embodiments, the multiple observation points comprises one or more static observation points; and each static observation point is associated with one or more tracks mapped to the static observation point. In some embodiments, the multiple observation points comprises one or more dynamic observation points; and each dynamic observation point is associated with one or more timed metadata tracks.

The apparatus also includes means, such as the processor 202, the memory 204, the communication interface 208 or the like, for determining whether a condition associated with the observation setup is met. With reference to Figure 6B, process flow 600 continues at block 604 with determining whether a condition associated with the observation setup is met. As discussed herein, many example implementations of embodiments of the invention contemplate controlling the observation point and orientation selection associated with audiovisual content based on aspects of the content (such as an orientation setup, MPVD, and/or other information about the content) and/or other factors, such as the positioning of a viewer and/or viewing device, the context in which the user encounters a particular segment or subsegment of content, and/or other factors, and responsively displaying content to the viewer in a particular manner. In some example implementations of block 604, determining whether a condition associated with the observation setup is met comprises determining an orientation associated with the playback device. For example, a playback device, such as virtual reality headset 114, for example, may be configured to detect and provide information associated with the absolute and/or relative positioning (including but not limited to the roll, pitch, and yaw and/or viewing angle) of the playback device, the user, or both. In some example implementations, determining whether a condition associated with the playback device is met comprises determining whether the playback device is in a continuous playback mode and/or whether the playback device is in a random access mode. As discussed herein, whether or not a particular observation setup is applied in a given situation may be sensitive to whether the user has randomly accessed a particular portion of an audiovisual presentation, or has encountered that same portion by viewing previous portions continuously, in order to provide the desired viewing experience to the viewer.

The apparatus also includes means, such as the processor 202, the memory 204, the communication interface 208 or the like, for, in response to determining whether a condition associated with the observation is met, selecting a subset of the transmission units of an audiovisual presentations. With reference to Figure 6, process flow 600 continues at block 606 with selecting a subset of the transmission units. With reference to Figures 3, 4, and 5 and the discussions related thereto, upon receiving an observation setup and determining whether any condition or conditions associated with the observation setup are met, one or more portions or views associated with the audiovisual presentation can be selected for display to the user. Any of the approaches to identifying and/or selecting the views to be presented discussed and/or contemplated herein may be used in example implementations of block 606.

The apparatus also includes means, such as the processor 202, the memory 204, the communication interface 208 or the like, for, causing a control signal to be generated, wherein the control signal is associated with a rendering operation of the selected subset of the transmission units of the audiovisual presentation on the playback device. With reference to Figure 6, process flow 600 continues at block 608 with causing a control signal associated with rendering the selected subset of the transmission units to be generated. In some example implementations of block 608, the control signal includes an indication of an intended behavior of a playback device. For example, upon determining whether any conditions associated with the observation setup are met and selecting one or more views to be displayed, the apparatus may generate a control signal that instructs and/or otherwise causes a viewing device, such as virtual reality headset 114, for example, to render the selected content in a particular, intended manner. For example, in situations where the received observation setup is to be applied, the control signal may be generated in a manner that can be recognized and processed by the rendering process and/or the viewing device to render the content in accordance with that observation setup. Similarly, in situations where the received observation setup is not to be applied, a control signal may be generated to confirm to the rendering process and/or the viewing device that the views rendered to the viewer should not be impacted by the received observation setup.

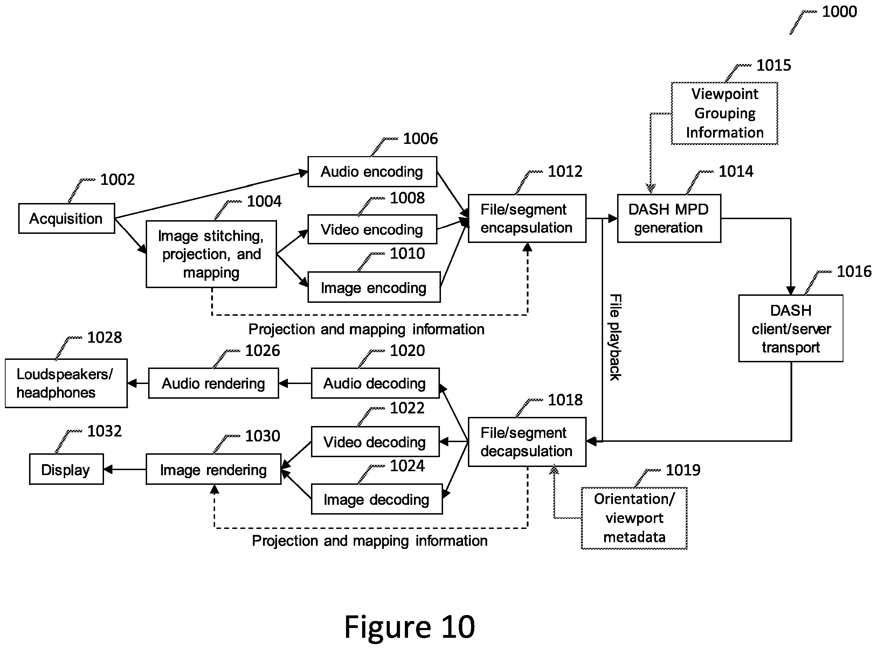

In an example, virtual reality content may be processed in accordance with example process 1000 as illustrated in Figure 10 or in accordance with subsets and/or variants thereof. As shown, in Figure 10, virtual reality content is acquired at block 1002, such as by one or more virtual reality cameras, other camera arrays, and/or other audiovisual equipment suitable for capturing virtual reality content. As shown in Figure 10, images acquired at block 1002 may be passed to block 1004, where a processor 202 is configured to perform image stitching, projection, and mapping. Audio acquired at block 1002 may be, in some implementations, passed to block 1006 for the processor to perform audio encoding, while the stitched, projected, and mapped images from block 1004 may be passed to block 1008 and/or block 1010 for the processor to perform video and/or image encoding. As depicted at block 1012 in Figure 10, the processor or other file encapsulator is configured to take the encoded media content including video, image, and audio from blocks 1006, 1008 and 1010 as input and encapsulate them into a container file. The processor or other file encapsulator may also be configured to receive and incorporate metadata into the file, such as projection and mapping information assisting in rendering the decoded packed VR frames. In implementations involving DASH, as shown in Figure 10, the processor or other DASH MPD generator is configured to take the file as input and generate at block 1014 an MPD, which may include VR-specific metadata such as projection and mapping metadata that can be generated on the basis of the equivalent information in the file. Further, the DASH MPD generation at block 1014 includes generation or intake of viewpoint grouping information as illustrated in block 1015. After DASH MPD generation at block 1014, DASH client/server transport is performed at block 1016, such as by the processor, the communication interface 208 or the like.

As shown at block 1018 in Figure 10, during file playback, the processor 202 or other file decapsulator is configured to process the file and/or the received (Sub)Segments, extract the coded bitstreams from tracks and parse the metadata. Orientation and viewport metadata may also be received and extracted by the processor. Audio information, video information, and image information may be decoded by the processor at blocks 1020, 1022, and 1024, respectively. The decoded packed VR frames generated by block 1022 and/or 1024 may be rendered by the processor at block 1030, which optionally involves the use of projection and/or mapping information received from the processor or other file decapsulator. As shown at block 1032, the rendered images may be projected by the processor, user interface 206 or the like onto the screen of a head-mounted display or any other display device based on the current viewing orientation and the projection and mapping metadata parsed from the file. Similarly, audio that is rendered at block 1026 may be output at block 1028 by the processor, the user interface or the like via loudspeakers and/or headphones.

Referring now to Figure 11, the operations performed by the apparatus 200 of Figure 2 in accordance with an example embodiment of the present invention are depicted as an example process flow 1100. In this regard, the apparatus includes means, such as the processor 202, the memory 204, the communication interface 208 or the like, for obtaining information about other viewpoints. In this example embodiment, a DASH client may show information about other viewpoints obtained and the DASH client may switch to another viewpoint upon user request or based on otherwise defined switching action (such as a pre-defined switching occurring at a defined time in a playback session), the DASH client may then request segment from the other viewpoint. As such, the apparatus is generally capable of switching between viewpoints in a playback session.

As described above, Figure 5, Figure 6 and Figure 11 illustrate flowcharts of an apparatus, method, and computer program product according to example embodiments of the invention. It will be understood that each block of the flowcharts, and combinations of blocks in the flowcharts, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by the memory device 204 of an apparatus employing an embodiment of the present invention and executed by the processor 202 of the apparatus. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In some embodiments, certain ones of the operations above may be modified or further amplified. Furthermore, in some embodiments, additional optional operations may be included. Modifications, additions, or amplifications to the operations above may be performed in any order and in any combination.

Some embodiments have been described herein with reference to 360° video. As used herein, the term 360° video should be understood to cover any projection format. Moreover, while in some implementations, a 360° field of view is contemplated, example implementations may be used in connection with other fields of view, including but not limited to fields of view with coverage other than 360°, and may generally be less than that, without departing from the scope of the embodiments described herein.

In the above, some embodiments have been described in relation to ISOBMFF and/or formats derived from ISOBMFF. However, many example embodiments similarly apply to other file and segment formats, including but not limited to the Matroska file format.

In the above, some embodiments have been described in relation to HTTP and/or HTTP GET requests. It needs to be understood that embodiments are not limited to the use of HTTP, but other protocols, such as WebSockets, may be used instead or additionally. Likewise, different versions of HTTP may be used, such as HTTP/1.1 or HTTP/2. Likewise, HTTPS may be used. It also needs to be understood that the invention may be applied in cases where no requests, such as HTTP GET, are made by a client, e.g. when a client receives data through a broadcast, such as a broadcast service according to 3GPP Multimedia Broadcast/Multicast Service (MBMS).

In the above, some embodiments have been described in relation to MPEG-DASH or DASH. However, example implementations and embodiments similarly apply to other forms of streaming over HTTP, such as the Apple HTTP Live Streaming (HLS), for example. It should be understood that DASH-specific terminology in embodiments can be adjusted to similar terms in other streaming formats and systems.

In the above, some embodiments have been described in relation to Media Presentation Description (MPD) of MPEG-DASH. However, example implementations and embodiments similarly apply to other streaming manifest formats, such as the HLS M3U format, or other stream or presentation description formats, such as SDP (Session Description Protocol), for example.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
receiving (502) an indication associated with an initial observation setup of a set of transmission units of an audiovisual presentation, wherein the initial observation setup comprises:
multiple observation points, and
multiple observation orientations associated with the multiple observation points,
receiving (504) an indication associated with an intended behavior of a playback device (114);
determining (506) the intended behavior of the playback device (114); and
in response to determining the intended behavior of the playback device (114), causing (508) a control signal to be generated, wherein the control signal is associated with a rendering operation of the audiovisual presentation on the playback device (114),
**characterised in that**:
the multiple observation points are categorized by one or more observation groups, and
each observation group comprises one default observation point and one origin point.

2. A method according to claim 1, wherein the one or more observation point groups comprises one or more spatially related observation point groups, and wherein a set of observation points in each spatially related observation point group has a spatial relationship between the set of observation points.

3. An apparatus (200) comprising at least one processor (202) and at least one memory (204) storing computer program code, the at least one memory (204) and the computer program code configured to, with the processor (202), cause the apparatus (200) to at least:
receive an indication associated with an initial observation setup of a set of transmission units of an audiovisual presentation, wherein the initial observation setup comprises:
multiple observation points, and
multiple observation orientations associated with the multiple observation points,
receive an indication associated with an intended behavior of a playback device (114);
determine the intended behavior of the playback device (114); and
in response to determining the intended behavior of the playback device (114), cause a control signal to be generated, wherein the control signal is associated with a rendering operation of the audiovisual presentation on the playback device (114),
**characterised in that** the at least one memory (204) and the computer program code configured to, with the processor (202), cause the apparatus (200) to:
categorize the multiple observation points by one or more observation groups, wherein each observation group comprises one default observation point and one origin point.

4. An apparatus (200) according to claim 3, wherein the one or more observation point groups comprises one or more spatially related observation point groups, and wherein a set of observation points in each spatially related observation point group has a spatial relationship between the set of observation points.

5. An apparatus (200) according to claim 3, wherein the one or more observation point groups comprises one or more logically related observation point groups, and wherein a set of observation points in each spatially related observation point group has a pre-defined logical relationship between the set of observation points.

6. An apparatus (200) according to any one of claims 3 to 5, wherein the multiple observation points comprises one or more static observation points, and wherein each static observation point is associated with one or more tracks mapped to the static observation point.

7. An apparatus (200) according to any one of claims 3 to 5, wherein the multiple observation points comprises one or more dynamic observation points, and wherein each dynamic observation point is associated with one or more timed metadata tracks.

8. An apparatus (200) according to any one of claims 3 to 7, wherein the default observation point is the same as the origin observation point.

9. A method comprising:
detecting (602) an observation setup associated with a set of transmission units of an audiovisual presentation wherein the observation setup comprises:
multiple observation points, and
multiple observation orientations associated with the multiple observation points,
determining (604) whether a condition associated with the observation setup is met;
in response to determining whether a condition associated with the observation setup is met, selecting (606) a subset of the transmission units of an audiovisual presentation; and
causing (608) a control signal to be generated, wherein the control signal is associated with a rendering operation of the selected subset of the transmission units of the audiovisual presentation on a playback device (114),
**characterised in that**:
the multiple observation points are categorized by one or more observation groups, and
each observation group comprises one default observation point and one origin point.

10. An apparatus (200) comprising at least one processor (202) and at least one memory (204) storing computer program code, the at least one memory (204) and the computer program code configured to, with the processor (202), cause the apparatus (200) to at least:
detect (602) an observation setup associated with a set of transmission units of an audiovisual presentation wherein the observation setup comprises:
multiple observation points, and
multiple observation orientations associated with the multiple observation points,
determine (604) whether a condition associated with the observation setup is met;
in response to determining whether a condition associated with the observation setup is met, select (606) a subset of the transmission units of an audiovisual presentation; and
cause (608) a control signal to be generated, wherein the control signal is associated with a rendering operation of the selected subset of the transmission units of the audiovisual presentation on a playback device (114) ,
**characterised in that** the at least one memory (204) and the computer program code configured to, with the processor (202), cause the apparatus (200) to:
categorize the multiple observation points by one or more observation groups, wherein each observation group comprises one default observation point and one origin point.

11. An apparatus (200) according to claim 10, wherein the one or more observation point groups comprises one or more spatially related observation point groups, and wherein a set of observation points in each spatially related observation point group has a spatial relationship between the set of observation points.

12. An apparatus (200) according to claim 10, wherein the one or more observation point groups comprises one or more logically related observation point groups, and wherein a set of observation points in each spatially related observation point group has a pre-defined logical relationship between the set of observation points.

13. An apparatus (200) according to any one of claims 10 to 12, wherein the multiple observation points comprises one or more static observation points, and wherein each static observation point is associated with one or more tracks mapped to the static observation point.

14. An apparatus (200) according to any one of claims 10 to 12, wherein the multiple observation points comprises one or more dynamic observation points, and wherein each dynamic observation point is associated with one or more timed metadata tracks.

15. An apparatus (200) according to any one of claims 10 to 14, wherein the default observation point is the same as the origin observation point.

## Patentansprüche

1. Verfahren, das Folgendes umfasst:
Empfangen (502) einer Anzeige, die mit einem anfänglichen Beobachtungsaufbau eines Satzes von Übertragungseinheiten einer audiovisuellen Präsentation verknüpft ist, wobei der anfängliche Beobachtungsaufbau Folgendes umfasst:
mehrere Beobachtungspunkte, und
mehrere Beobachtungsausrichtungen, die mit den mehreren Beobachtungspunkten verknüpft sind,
Empfangen (504) einer Anzeige, die mit einem beabsichtigten Verhalten einer Wiedergabevorrichtung (114) verknüpft ist;
Bestimmen (506) des beabsichtigten Verhaltens der Wiedergabevorrichtung (114); und
in Reaktion auf das Bestimmen des beabsichtigten Verhaltens der Wiedergabevorrichtung (114) Veranlassen (508), dass ein Steuersignal erzeugt wird, wobei das Steuersignal mit einer Renderoperation der audiovisuellen Präsentation auf der Wiedergabevorrichtung (114) verknüpft ist,
**dadurch gekennzeichnet, dass**:
die mehreren Beobachtungspunkte durch eine oder mehrere Beobachtungsgruppen kategorisiert sind, und
jede Beobachtungsgruppe einen standardmäßigen Beobachtungspunkt und einen Ursprungspunkt umfasst.

2. Verfahren nach Anspruch 1, wobei die eine oder die mehreren Beobachtungspunktgruppen eine oder mehrere raumbezogene Beobachtungspunktgruppen umfassen, und wobei ein Satz von Beobachtungspunkten in jeder raumbezogenen Beobachtungspunktgruppe eine räumliche Beziehung zwischen den Sätzen von Beobachtungspunkten aufweist.

3. Einrichtung (200), die mindestens einen Prozessor (202) und mindestens einen Speicher (204) umfasst, in dem Computerprogrammcode gespeichert ist, wobei der mindestens eine Speicher (204) und der Computerprogrammcode dazu ausgelegt sind, die Einrichtung (200) mit dem Prozessor (202) mindestens zu Folgendem zu veranlassen:
Empfangen einer Anzeige, die mit einem anfänglichen Beobachtungsaufbau eines Satzes von Übertragungseinheiten einer audiovisuellen Präsentation verknüpft ist, wobei der anfängliche Beobachtungsaufbau Folgendes umfasst:
mehrere Beobachtungspunkte, und
mehrere Beobachtungsausrichtungen, die mit den mehreren Beobachtungspunkten verknüpft sind,
Empfangen einer Anzeige, die mit einem beabsichtigten Verhalten einer Wiedergabevorrichtung (114) verknüpft ist;
Bestimmen des beabsichtigten Verhaltens der Wiedergabevorrichtung (114); und
in Reaktion auf das Bestimmen des beabsichtigten Verhaltens der Wiedergabevorrichtung (114) Veranlassen, dass ein Steuersignal erzeugt wird, wobei das Steuersignal mit einer Renderoperation der audiovisuellen Präsentation auf der Wiedergabevorrichtung (114) verknüpft ist,
**dadurch gekennzeichnet, dass** der mindestens eine Speicher (204) und der Computerprogrammcode dazu ausgelegt sind, die Einrichtung (200) mit dem Prozessor (202) mindestens zu Folgendem zu veranlassen:
Kategorisieren der mehreren Beobachtungspunkte durch eine oder mehrere Beobachtungsgruppen, wobei jede Beobachtungsgruppe einen standardmäßigen Beobachtungspunkt und einen Ursprungspunkt umfasst.

4. Einrichtung (200) nach Anspruch 3, wobei die eine oder die mehreren Beobachtungspunktgruppen eine oder mehrere raumbezogene Beobachtungspunktgruppen umfassen, und wobei ein Satz von Beobachtungspunkten in jeder raumbezogenen Beobachtungspunktgruppe eine räumliche Beziehung zwischen den Sätzen von Beobachtungspunkten aufweist.

5. Einrichtung (200) nach Anspruch 3, wobei die eine oder die mehreren Beobachtungspunktgruppen eine oder mehrere logikbezogene Beobachtungspunktgruppen umfassen, und wobei ein Satz von Beobachtungspunkten in jeder raumbezogenen Beobachtungspunktgruppe eine vordefinierte logische Beziehung zwischen den Sätzen von Beobachtungspunkten aufweist.

6. Einrichtung (200) nach einem der Ansprüche 3 bis 5, wobei die mehreren Beobachtungspunkte einen oder mehrere statische Beobachtungspunkte umfassen, und wobei jeder statische Beobachtungspunkt mit einer oder mehreren Spuren verknüpft ist, die dem statischen Beobachtungspunkt zugeordnet sind.

7. Einrichtung (200) nach einem der Ansprüche 3 bis 5, wobei die mehreren Beobachtungspunkte einen oder mehrere dynamische Beobachtungspunkte umfassen, und wobei jeder dynamische Beobachtungspunkt mit einer oder mehreren getimten Metadatenspuren verknüpft ist.

8. Einrichtung (200) nach einem der Ansprüche 3 bis 7, wobei der standardmäßige Beobachtungspunkt derselbe ist wie der Ursprungsbeobachtungspunkt.

9. Verfahren, das Folgendes umfasst:
Detektieren (602) eines Beobachtungsaufbaus, der mit einem Satz von Übertragungseinheiten einer audiovisuellen Präsentation verknüpft ist, wobei der Beobachtungsaufbau Folgendes umfasst:
mehrere Beobachtungspunkte, und
mehrere Beobachtungsausrichtungen, die mit den mehreren Beobachtungspunkten verknüpft sind,
Bestimmen (604), ob eine mit dem Beobachtungsaufbau verknüpfte Bedingung erfüllt ist;
in Reaktion auf das Bestimmen, ob eine mit dem Beobachtungsaufbau verknüpfte Bedingung erfüllt ist, Auswählen (606) eines Untersatzes der Übertragungseinheiten einer audiovisuellen Präsentation; und
Veranlassen (608), dass ein Steuersignal erzeugt wird, wobei das Steuersignal mit einer Renderoperation des ausgewählten Untersatzes der Übertragungseinheiten der audiovisuellen Präsentation auf einer Wiedergabevorrichtung (114) verknüpft ist,
**dadurch gekennzeichnet, dass**:
die mehreren Beobachtungspunkte durch eine oder mehrere Beobachtungsgruppen kategorisiert sind, und
jede Beobachtungsgruppe einen standardmäßigen Beobachtungspunkt und einen Ursprungspunkt umfasst.

10. Einrichtung (200), die mindestens einen Prozessor (202) und mindestens einen Speicher (204) umfasst, in dem Computerprogrammcode gespeichert ist, wobei der mindestens eine Speicher (204) und der Computerprogrammcode dazu ausgelegt sind, die Einrichtung (200) mit dem Prozessor (202) mindestens zu Folgendem zu veranlassen:
Detektieren (602) eines Beobachtungsaufbaus, der mit einem Satz von Übertragungseinheiten einer audiovisuellen Präsentation verknüpft ist, wobei der Beobachtungsaufbau Folgendes umfasst:
mehrere Beobachtungspunkte, und
mehrere Beobachtungsausrichtungen, die mit den mehreren Beobachtungspunkten verknüpft sind,
Bestimmen (604), ob eine mit dem Beobachtungsaufbau verknüpfte Bedingung erfüllt ist;
in Reaktion auf das Bestimmen, ob eine mit dem Beobachtungsaufbau verknüpfte Bedingung erfüllt ist, Auswählen (606) eines Untersatzes der Übertragungseinheiten einer audiovisuellen Präsentation; und
Veranlassen (608), dass ein Steuersignal erzeugt wird, wobei das Steuersignal mit einer Renderoperation des ausgewählten Untersatzes der Übertragungseinheiten der audiovisuellen Präsentation auf einer Wiedergabevorrichtung (114) verknüpft ist,
**dadurch gekennzeichnet, dass** der mindestens eine Speicher (204) und der Computerprogrammcode dazu ausgelegt sind, die Einrichtung (200) mit dem Prozessor (202) mindestens zu Folgendem zu veranlassen:
Kategorisieren der mehreren Beobachtungspunkte durch eine oder mehrere Beobachtungsgruppen, wobei jede Beobachtungsgruppe einen standardmäßigen Beobachtungspunkt und einen Ursprungspunkt umfasst.

11. Einrichtung (200) nach Anspruch 10, wobei die eine oder die mehreren Beobachtungspunktgruppen eine oder mehrere raumbezogene Beobachtungspunktgruppen umfassen, und wobei ein Satz von Beobachtungspunkten in jeder raumbezogenen Beobachtungspunktgruppe eine räumliche Beziehung zwischen den Sätzen von Beobachtungspunkten aufweist.

12. Einrichtung (200) nach Anspruch 10, wobei die eine oder die mehreren Beobachtungspunktgruppen eine oder mehrere logikbezogene Beobachtungspunktgruppen umfassen, und wobei ein Satz von Beobachtungspunkten in jeder raumbezogenen Beobachtungspunktgruppe eine vordefinierte logische Beziehung zwischen den Sätzen von Beobachtungspunkten aufweist.

13. Einrichtung (200) nach einem der Ansprüche 10 bis 12, wobei die mehreren Beobachtungspunkte einen oder mehrere statische Beobachtungspunkte umfasst, und wobei jeder statische Beobachtungspunkte mit einer oder mehreren Spuren verknüpft ist, die dem statischen Beobachtungspunkt zugeordnet sind.

14. Einrichtung (200) nach einem der Ansprüche 10 bis 12, wobei die mehreren Beobachtungspunkte einen oder mehrere dynamische Beobachtungspunkte umfassen, und wobei jeder dynamische Beobachtungspunkt mit einer oder mehreren getimten Metadatenspuren verknüpft ist.

15. Einrichtung (200) nach einem der Ansprüche 10 bis 14, wobei der standardmäßige Beobachtungspunkt derselbe ist wie in der Ursprungsbeobachtungspunkt.

## Revendications

1. Procédé comprenant :
la réception (502) d'une indication associée à une configuration d'observation initiale d'un ensemble d'unités de transmission d'une présentation audiovisuelle, dans lequel la configuration d'observation initiale comprend :
des points d'observation multiples, et
des orientations d'observation multiples associées aux points d'observation multiples,
la réception (504) d'une indication associée à un comportement prévu d'un dispositif de lecture (114) ;
la détermination (506) du comportement prévu du dispositif de lecture (114) ; et
en réponse à la détermination du comportement prévu du dispositif de lecture (114), la provocation (508) de la génération d'un signal de commande, dans lequel le signal de commande est associé à une opération de rendu de la présentation audiovisuelle sur le dispositif de lecture (114),
**caractérisé en ce que**
les points d'observation multiples sont classés en un ou plusieurs groupes d'observation, et
chaque groupe d'observation comprend un point d'observation par défaut et un point d'origine.

2. Procédé selon la revendication 1, dans lequel les un ou plusieurs groupes de points d'observation comprennent un ou plusieurs groupes de points d'observation liés dans l'espace, et dans lequel un ensemble de points d'observation dans chaque groupe de points d'observation liés dans l'espace a une relation spatiale entre l'ensemble de points d'observation.

3. Appareil (200) comprenant au moins un processeur (202) et au moins une mémoire (204) stockant un code de programme informatique, l'au moins une mémoire (204) et le code de programme informatique étant configurés pour, avec le processeur (202), amener l'appareil (200) à au moins :
recevoir une indication associée à une configuration d'observation initiale d'un ensemble d'unités de transmission d'une présentation audiovisuelle, dans lequel la configuration d'observation initiale comprend :
des points d'observation multiples, et
des orientations d'observation multiples associées aux points d'observation multiples,
recevoir une indication associée à un comportement prévu d'un dispositif de lecture (114) ;
déterminer le comportement prévu du dispositif de lecture (114) ; et
en réponse à la détermination du comportement prévu du dispositif de lecture (114), provoquer la génération d'un signal de commande, dans lequel le signal de commande est associé à une opération de rendu de la présentation audiovisuelle sur le dispositif de lecture (114),
**caractérisé en ce que** l'au moins une mémoire (204) et le code de programme informatique sont configurés pour, avec le processeur (202), amener l'appareil (200) à :
classer les points d'observation multiples en un ou plusieurs groupes d'observation, dans lequel chaque groupe d'observation comprend un point d'observation par défaut et un point d'origine.

4. Appareil (200) selon la revendication 3, dans lequel les un ou plusieurs groupes de points d'observation comprennent un ou plusieurs groupes de points d'observation liés dans l'espace, et dans lequel un ensemble de points d'observation dans chaque groupe de points d'observation liés dans l'espace a une relation spatiale entre l'ensemble de points d'observation.

5. Appareil (200) selon la revendication 3, dans lequel les un ou plusieurs groupes de points d'observation comprennent un ou plusieurs groupes de points d'observation logiquement liés, et dans lequel un ensemble de points d'observation dans chaque groupe de points d'observation liés dans l'espace a une relation logique prédéfinie entre l'ensemble de points d'observation.

6. Appareil (200) selon l'une des revendications 3 à 5, dans lequel les points d'observation multiples comprennent un ou plusieurs points d'observation statiques, et dans lequel chaque point d'observation statique est associé à une ou plusieurs pistes mappées au point d'observation statique.

7. Appareil (200) selon l'une des revendications 3 à 5, dans lequel les points d'observation multiples comprennent un ou plusieurs points d'observation dynamiques, et dans lequel chaque point d'observation dynamique est associé à une ou plusieurs pistes de métadonnées chronométrées.

8. Appareil (200) selon l'une des revendications 3 à 7, dans lequel le point d'observation par défaut est le même que le point d'observation d'origine.

9. Procédé comprenant :
la détection (602) d'une configuration d'observation associée à un ensemble d'unités de transmission d'une présentation audiovisuelle, dans lequel la configuration d'observation comprend :
des points d'observation multiples, et
des orientations d'observation multiples associées aux points d'observation multiples,
la détermination (604) précisant si une condition associée à la configuration d'observation est remplie ;
en réponse à la détermination précisant si une condition associée à la configuration d'observation est remplie, la sélection (606) d'un sous-ensemble des unités de transmission d'une présentation audiovisuelle ; et
la provocation (608) de la génération d'un signal de commande, dans lequel le signal de commande est associé à une opération de rendu du sous-ensemble sélectionné des unités de transmission de la présentation audiovisuelle sur un dispositif de lecture (114),
**caractérisé en ce que** :
les points d'observation multiples sont classés en un ou plusieurs groupes d'observation, et
chaque groupe d'observation comprend un point d'observation par défaut et un point d'origine.

10. Appareil (200) comprenant au moins un processeur (202) et au moins une mémoire (204) stockant un code de programme informatique, l'au moins une mémoire (204) et le code de programme informatique étant configurés pour, avec le processeur (202), amener l'appareil (200) à au moins :
détecter (602) une configuration d'observation associée à un ensemble d'unités de transmission d'une présentation audiovisuelle, dans lequel la configuration d'observation comprend :
des points d'observation multiples, et
des orientations d'observation multiples associées aux points d'observation multiples,
déterminer (604) si une condition associée à la configuration d'observation est remplie ;
en réponse à la détermination précisant si une condition associée à la configuration d'observation est remplie, sélectionner (606) un sous-ensemble des unités de transmission d'une présentation audiovisuelle ; et
provoquer (608) la génération d'un signal de commande, dans lequel le signal de commande est associé à une opération de rendu du sous-ensemble sélectionné des unités de transmission de la présentation audiovisuelle sur un dispositif de lecture (114),
**caractérisé en ce que** l'au moins une mémoire (204) et le code de programme informatique sont configurés pour, avec le processeur (202), amener l'appareil (200) à :
classer les points d'observation multiples en un ou plusieurs groupes d'observation, dans lequel chaque groupe d'observation comprend un point d'observation par défaut et un point d'origine.

11. Appareil (200) selon la revendication 10, dans lequel les un ou plusieurs groupes de points d'observation comprennent un ou plusieurs groupes de points d'observation liés dans l'espace, et dans lequel un ensemble de points d'observation dans chaque groupe de points d'observation liés dans l'espace a une relation spatiale entre l'ensemble de points d'observation.

12. Appareil (200) selon la revendication 10, dans lequel les un ou plusieurs groupes de points d'observation comprennent un ou plusieurs groupes de points d'observation logiquement liés, et dans lequel un ensemble de points d'observation dans chaque groupe de points d'observation liés dans l'espace a une relation logique prédéfinie entre l'ensemble de points d'observation.

13. Appareil (200) selon l'une des revendications 10 à 12, dans lequel les points d'observation multiples comprennent un ou plusieurs points d'observation statiques, et dans lequel chaque point d'observation statique est associé à une ou plusieurs pistes mappées au point d'observation statique.

14. Appareil (200) selon l'une des revendications 10 à 12, dans lequel les points d'observation multiples comprennent un ou plusieurs points d'observation dynamiques, et dans lequel chaque point d'observation dynamique est associé à une ou plusieurs pistes de métadonnées chronométrées.

15. Appareil (200) selon l'une des revendications 10 à 14, dans lequel le point d'observation par défaut est le même que le point d'observation d'origine.
